# FASCICULE DE BREVET EUROPEEN

(11) **EP 0 607 895 B1**
(45) Date de publication et mention de la délivrance du brevet: **26.09.2001**
(21) Numéro de dépôt: 94100572.0
(22) Date de dépôt: 17.01.1994
(51) Int. Cl.: G11B 17/22, G11B 15/68

(54) **Installation destinée à l'enregisterement et/ou la lecture automatique de supports d'information**
Automatische Aufzeichnungs- und/oder Wiedergabeanlage für Informationsträger
Installation for the automatic recording and/or reproducing of information carriers

(30) Priorité: 19.01.1993 FR 9300569
(43) Date de publication de la demande: 27.07.1994
(73) Titulaire: Forrer, Andreas, 6330 Cham (CH); Pisino, Dominique, 2000 Neuchatel (CH)
(72) Inventeur: Forrer, Andreas, 6330 Cham (CH); Pisino, Dominique, 2000 Neuchatel (CH)
(74) Mandataire: Colas, Jean-Pierre

(56) Documents cités:
- EP-A- 0 277 634
- EP-A- 0 288 165
- EP-A- 0 426 456
- EP-A- 0 426 654
- EP-A- 0 550 282
- WO-A-90/04845
- DE-A- 3 914 128
- US-A- 4 685 095
- US-A- 5 054 836
- PATENT ABSTRACTS OF JAPAN vol. 12, no. 107 (P-686) 7 Avril 1988 & JP-A-62 239 370 (SONY CORP.) 20 Octobre 1987

## Description

La présente invention est relative à une installation destinée à l'enregistrement et/ou la lecture automatiques de supports d'information tels que les bandes magnétiques, les disques sonores ou vidéo sous forme compacte ou non, et d'une façon générale, de tout support capable de porter, sous quelque forme que ce soit, de l'information restituable. Ainsi, l'invention peut également s'appliquer à des supports d'information tels que les diapositives photographiques, ou des supports contenant de l'information sous forme numérisée.

Plus particulièrement, l'invention concerne une telle installation, en particulier de type professionnel, capable de stocker un très grand nombre de supports d'enregistrement et de lire l'information qui y est inscrite, moyennant un processus entièrement automatique de recherche des supports et de leur rangement après lecture, ce processus étant, de préférence, commandé par ordinateur. De telles installations sont employées notamment dans les stations de diffusion radio ou de télévision dans lesquelles il est souhaitable que le processus de sélection et de lecture des supports puisse se faire automatiquement et de façon préprogrammée.

Bien qu'elle n'y soit pas spécifiquement limitée, l'invention peut s'employer avec avantage pour la lecture d'une "discothèque" de disques compacts, quelle que soit d'ailleurs la nature de l'information qui y est inscrite.

D'après le document DE 3 621 790, on connaît une installation du type général indiqué ci-dessus, et destinée plus spécifiquement à employer des cassettes magnétiques. Cette installation connue comporte plusieurs colonnes de stockage des cassettes, dans lesquelles celles-ci sont disposées sur plusieurs étages circulaires. Les colonnes elles-mêmes sont disposées autour d'un espace central dans lequel peut évoluer un mécanisme de manipulation des cassettes destiné à les prélever des colonnes de stockage, à les introduire sélectivement dans plusieurs lecteurs de cassettes, à les en enlever et finalement à les restituer aux colonnes de stockage. Celles-ci sont équipées chacune d'un organe manipulateur communiquant avec le mécanisme manipulateur de l'espace central et assurant le transfert des cassettes de leur emplacement de stockage vers l'espace central et inversement.

Grâce à la présence de plusieurs lecteurs de cassettes, il est possible avec cette installation d'opérer un fondu sonore, c'est-à-dire de restituer des enregistrements de deux cassettes différentes sans interruption, l'un des enregistrements pouvant se substituer progressivement à l'autre, ce qui est un procédé habituel dans la technique de la radiodiffusion ou de l'illustration sonore, par exemple. Il est à noter que cette installation connue peut être utilisée, mutatis mutandis, avec des disques compacts et, de manière générale, avec tous supports d'enregistrement connus.

Il est évident qu'une installation de ce type n'a une utilité que si le contenu du ou des magasins de supports d'enregistrement peut être facilement changé, surtout dans le domaine de la diffusion radiophonique ou de télévision. En effet, ce contenu doit suivre la parution de nouvelles éditions, voire être à tout moment conforme aux enregistrements "à la mode". Il est donc important que le changement puisse se faire moyennant un temps de travail de l'opérateur aussi faible que possible avec un minimum d'erreurs. Or, ceci n'est précisément pas le cas dans l'installation décrite dans le brevet allemand précité dans lequel cette opération est difficile à exécuter, en raison du fait que l'opérateur doit repérer sans se tromper les endroits dans les magasins où un support d'enregistrement doit être remplacé. Il doit ensuite exécuter ce remplacement, ce qui oblige à rendre accessibles tous les postes de stockage de tous les magasins. En outre, l'opération de changement nécessite pratiquement l'arrêt de l'installation. Ceci est évidemment gênant dans une station de radiodiffusion, par exemple.

Les mêmes difficultés se présentent dans une installation connue du même type, encore que spécifiquement destinée à la manipulation de bobines de bandes magnétiques pour mémoires d'ordinateur, installation qui est décrite dans le brevet US 3 920 195. Dans cette installation, on ne prévoit qu'un seul poste de lecture/enregistrement des bandes magnétiques, de sorte qu'il n'est pas possible d'y opérer le fondu sonore, comme c'est le cas dans l'installation du brevet allemand précité. En revanche, le remplacement des supports d'enregistrement ou bandes magnétiques est ici facilité en ce sens que les bobines sont rangées dans des cartouches regroupant plusieurs bandes ensemble que l'on peut donc remplacer d'un bloc. Si cette configuration peut être pratique dans les "librairies" de mémoire d'ordinateur, il n'en va pas de même dans une application à la restitution d'enregistrements sonores, dans laquelle, souvent, on ne veut remplacer qu'une seule cassette (ou disque compact) dans un groupe de tels supports d'enregistrement. Si, par exemple, dans une cartouche un seul de ces supports doit être remplacé, il faut enlever toute la cartouche de la machine, opérer le remplacement, puis remettre la cartouche en place. Bien entendu, pendant cette opération, tous les supports d'enregistrement de la cartouche concernée sont inutilisables, alors qu'il se pourrait que le programme à diffuser comporte précisément la lecture de tout ou partie de l'un de ces supports. Pour éviter ceci, il faut alors coordonner le programme de diffusion avec le remplacement des supports ce qui enlève une grande part des possibilités d'automatisation à l'installation. En outre, cette installation connue nécessite une accessibilité à tous les postes de rangement des cartouches.

Des inconvénients analogues se retrouvent dans une troisième installation, connue de la demande de brevet EP 0 464 382, cette installation étant destinée plus spécifiquement à la lecture de disques compacts.

EP-A-0 288 165 et EP-A-0 277 634 divulguent une installation qui comprend des moyens de stockage présentant une pluralité d'emplacements de stockage destinés à recevoir chacun un supports d'enregistrement, tous les emplacements de stockage s'ouvrant sur une même face, les moyens de transfert étant agencés pour se déplacer selon deux directions perpendiculaires devant ladite face.

Dans EP-A-0 288 165 qui représente l'état de la technique le plus proche lesdits emplacements de stockage comportent une pluralité d'emplacements dans une cassette qui est mobile dans la direction perpendiculaire au plan de ladite face. La cassette peut entrer en collision avec les moyens de transfert quand la cassette traverse le plan des moyens de transfert.

Dans EP-A-0 277 634 un emplacement de stockage peut se tourner de 180°, il se deplace donc aussi dans une direction perpendiculaire à ladite face, mais il ne peut pas entrer en collision avec les moyens de transfert.

WO-90/04845 divulgue une installation qui comprend des moyens de stockage présentant une pluralité d'emplacements de stockage destinés à recevoir chacun un support d'enregistrement, les emplacements de stockage s'ouvrant sur une même face. Les moyens de transfert sont agencés pour se déplacer selon une seule direction devant ladite face. Un emplacement de stockage peut se deplacer dans une direction parallel à ladite face, donc il ne peut pas entrer en collision avec les moyens de transfert.

L'invention a pour but de fournir une installation du type général indiqué ci-dessus, dépourvue de ces inconvénients, et qui est, au contraire, équipée de telle façon que la tenue à jour du stock de disques ou de supports d'enregistrement puisse se faire très commodément, sans nécessiter l'accessibilité pour l'opérateur aux postes de stockage et sans que le fonctionnement de l'installation n'ait à être interrompue pendant le remplacement des supports d'enregistrement. En outre, cette installation suivant l'invention peut être totalement automatisée au moyen d'une commande programmée exécutée par un ordinateur.

L'invention a donc pour objet une installation selon la revendication 1.

Grâce à ces caractéristiques, des supports d'enregistrement peuvent être chargés dans l'installation suivant l'invention ou y être remplacés par petites quantités, en étant stockés de façon temporaire dans les moyens de stockage prévus à cet effet. Comme ces moyens de stockage temporaire sont déplaçables hors de la discothèque, on peut préparer à l'avance pour le chargement une certaine quantité de supports, puis mettre les moyens de stockage temporaire à l'endroit dans la discothèque prévu à cet effet, puis commander le transfert automatique de ces supports vers les endroits qui leur sont respectivement assignés dans la discothèque. Inversement, les moyens de stockage temporaire, en étant vides et placés dans la discothèque peuvent être remplis avec un certain nombre de supports qui doivent être retirés de cette dernière.

Pendant la préparation des moyens de stockage temporaire pour le chargement, l'installation peut ainsi continuer à fonctionner pour la lecture et/ou l'enregistrement des supports. Si ces moyens de stockage temporaire sont amovibles, cette préparation pourra même se faire en dehors de l'installation sans que son fonctionnement normal en soit perturbé.

Un autre avantage de ces caractéristiques selon l'invention réside dans le fait qu'un opérateur n'a pas besoin d'avoir accès à toute la discothèque pour opérer des changements de son contenu. Ainsi, l'installation peut être construite de telle manière que la discothèque ainsi que les moyens de lecture et/ou d'enregistrement soient toujours à l'abri de la poussière dans une enceinte fermée, dans laquelle une trappe de faibles dimensions peut être prévue pour y placer ou en enlever les moyens de stockage temporaire.

D'autres caractéristiques et avantages de la présente invention apparaîtront au cours de la description qui va suivre, donnée uniquement à titre d'exemple et faite en se référant aux dessins annexés sur lesquels :
- la figure 1 représente une vue d'ensemble, en élévation frontale, du mode de réalisation préféré d'une installation selon l'invention;
- la figure 2 est une vue générale en plan de cette installation;
- la figure 3 en est une vue en élévation latérale;
- la figure 4 est une vue, partiellement en coupe et à plus grande échelle que celle des figures 1, 2 et 3, d'une première variante de manipulateur de supports d'enregistrement, monté mobile verticalement sur une colonne, elle-même montée mobile horizontalement, le manipulateur étant représenté dans sa position de saisie d'un support d'enregistrement;
- la figure 5 est une vue en plan, partiellement en coupe, de la colonne mobile horizontalement, équipée de deux manipulateurs selon la figure 4;
- les figures 6 et 6A montrent une deuxième variante de manipulateur de supports d'enregistrement pouvant équiper l'installation selon l'invention, la figure 6 montrant le manipulateur en position de saisie d'un support d'enregistrement, et la figure 6A le montrant en position ouverte;
- les figures 7, 7A, 8 et 9 montrent, par des vues dans trois plans orthogonaux et à une échelle agrandie, les détails du manipulateur représenté sur les figures 4 et 5;
- la figure 10 montre une vue en élévation frontale et à grande échelle, une première variante d'un mécanisme d'entrée/sortie pour transférer les supports d'enregistrement du manipulateur vers un lecteur de ces supports et vice-versa, ce mécanisme étant représenté dans une première position active;
- la figure 11 montre le mécanisme d'entrée/sortie de la figure 10 dans une seconde position de repos;
- les figures 12, 13 et 14 montrent respectivement par des vues dans trois plans orthogonaux, un autre mode de réalisation d'un mécanisme d'entrée/sortie des supports;
- la figure 15 montre, par une vue en élévation, les détails de l'un des compartiments de stockage de supports d'enregistrement de l'installation suivant l'invention;
- la figure 16 est une vue de détail, à grande échelle et en coupe horizontale prise selon la ligne XVI-XVI de la figure 15, d'une première variante d'un dispositif de maintien des supports d'enregistrement dans leur compartiment de stockage;
- la figure 17 montre une vue en perspective à grande échelle d'une deuxième variante du dispositif de maintien des supports d'enregistrement dans leur compartiment de stockage;
- la figure 18 est une vue en coupe verticale prise selon la ligne XVIII-XVIII de la figure 17;
- la figure 19 montre, par une vue en perspective, une troisième variante de dispositif de maintien des supports d'enregistrement dans leur compartiment de stockage;
- la figure 20 est une vue en coupe verticale agrandie prise selon la ligne XX-XX de la figure 19;
- la figure 21 est une vue en élévation frontale de la cassette de chargement/déchargement de l'installation suivant l'invention, ainsi que de son mécanisme de translation;
- la figure 22 montre une vue latérale, partiellement en coupe, de la cassette et de son mécanisme de déplacement;
- la figure 23 est une vue en coupe horizontale selon la ligne XXIII-XXIII de la figure 21;
- la figure 24 et 25 sont des organigrammes simplifiés illustrant le fonctionnement du chargement/déchargement de l'installation suivant l'invention;
- la figure 26 est une vue en plan, à la même échelle que celle des figures 1 à 3, d'un autre mode de réalisation suivant l'invention;
- la figure 27 est une vue en élévation latérale du mode de réalisation représenté à la figure 26;
- la figure 28 montre un organigramme illustrant un aspect particulier du fonctionnement de l'installation suivant l'invention.

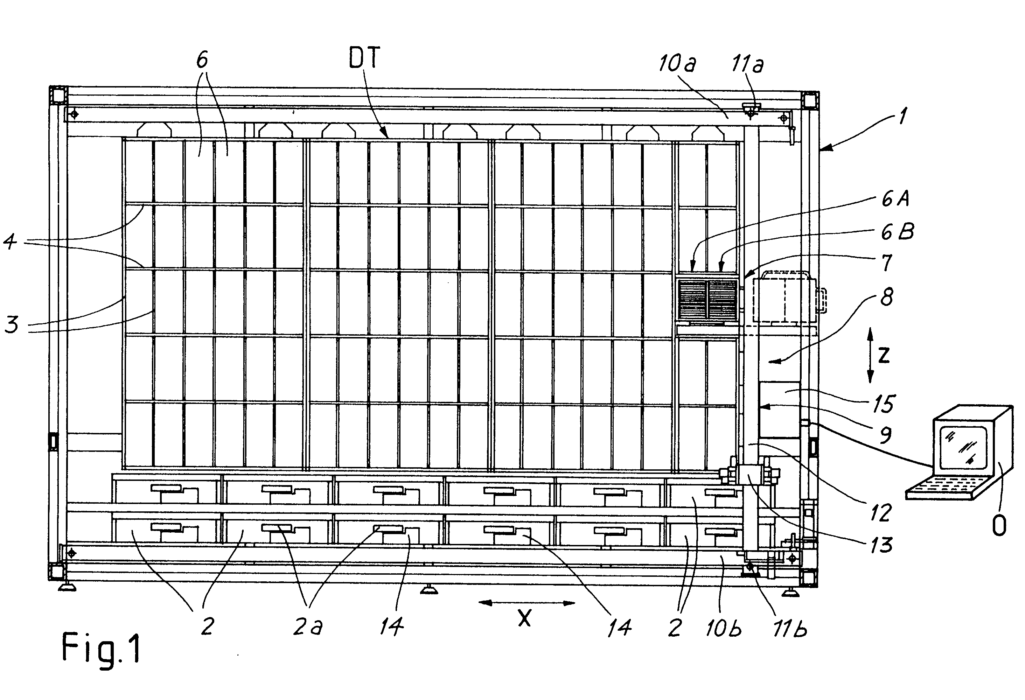

On va tout d'abord se référer aux figures 1 à 3 qui représentent l'ensemble d'une installation destinée à l'enregistrement et/ou à la lecture automatiques de supports d'information tels que les bandes magnétiques, les disques sonores ou vidéo, sous forme compacte ou non, et d'une façon générale, de tout support capable de porter de l'information restituable.

Cette installation comporte un châssis 1 fait de poutres métalliques, en profilé d'aluminium par exemple, et destiné à être posé sur le sol. Pour fixer les idées et uniquement à titre d'exemple, dans le mode de réalisation représenté aux figures, l'installation peut être conçue pour un stock de disques compacts (ou "discothèque" DT), de 6000 exemplaires par exemple, l'installation ayant dans ce cas environ les dimensions suivantes: hauteur 220 cm, largeur 341 cm et profondeur 133 cm. Extérieurement, le châssis 1 peut être habillé avec des parois transparentes, munies éventuellement de portes d'accès (non représentées sur les figures). Cependant, en utilisation normale, cet accès n'est pas nécessaire car, comme on le verra par la suite, l'installation peut fonctionner de façon automatique, tandis que l'introduction des supports ou leur retrait peuvent se faire à travers une petite ouverture latérale ne mesurant que 30 x 15 cm, par exemple. Ainsi, dès leur introduction les disques compacts ou autres supports d'enregistrement sont à tout moment à l'abri de la poussière.

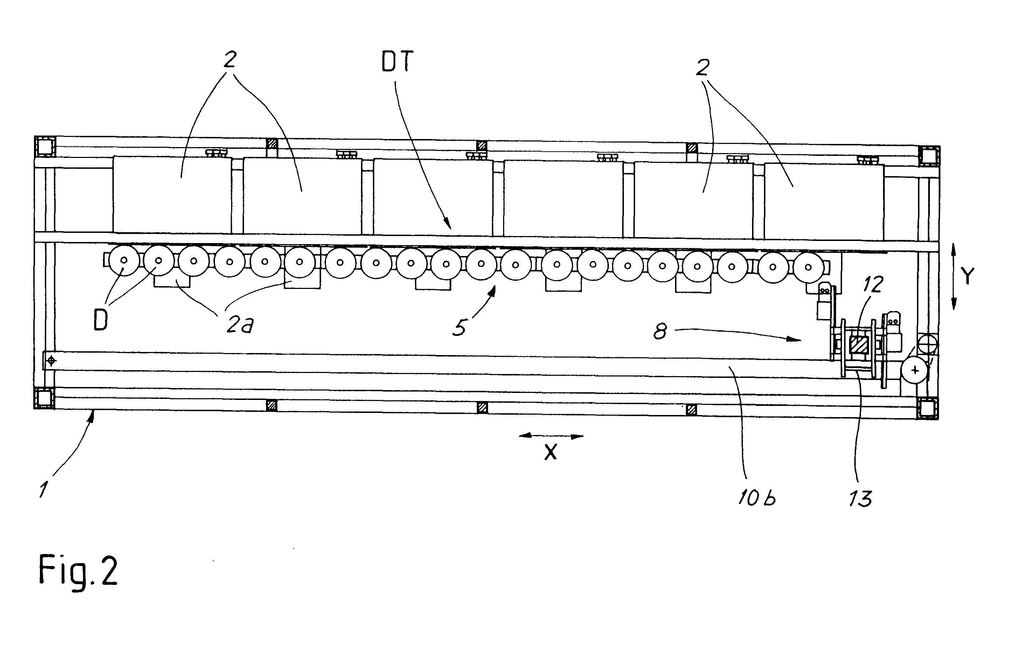

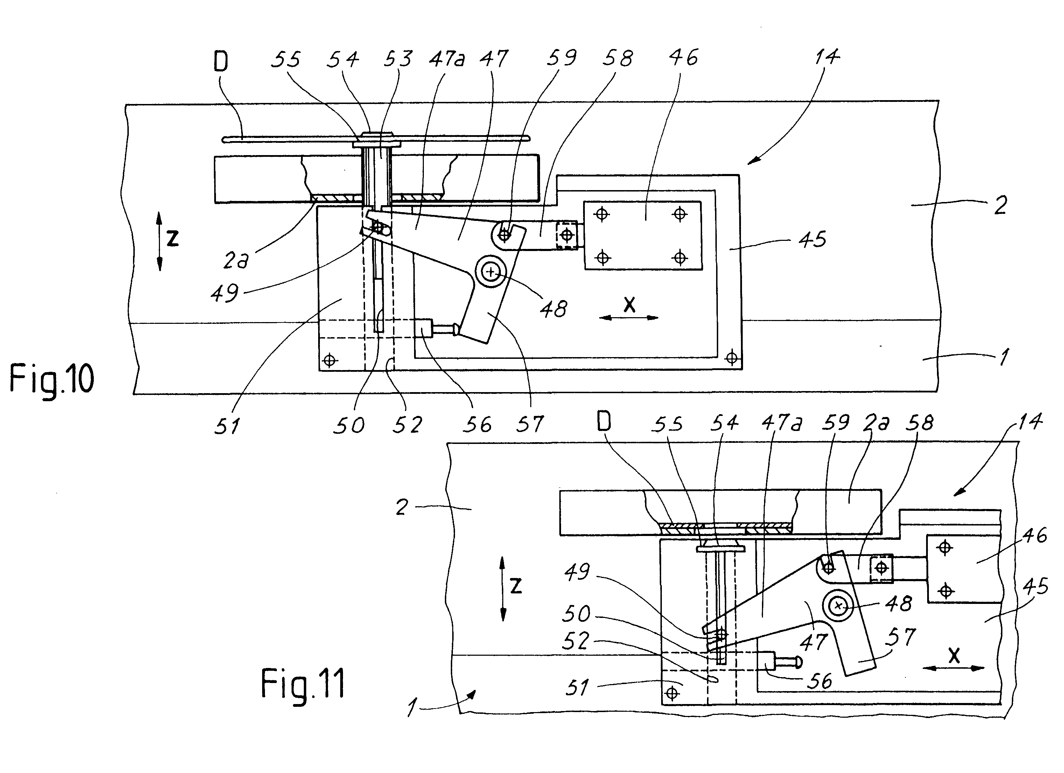

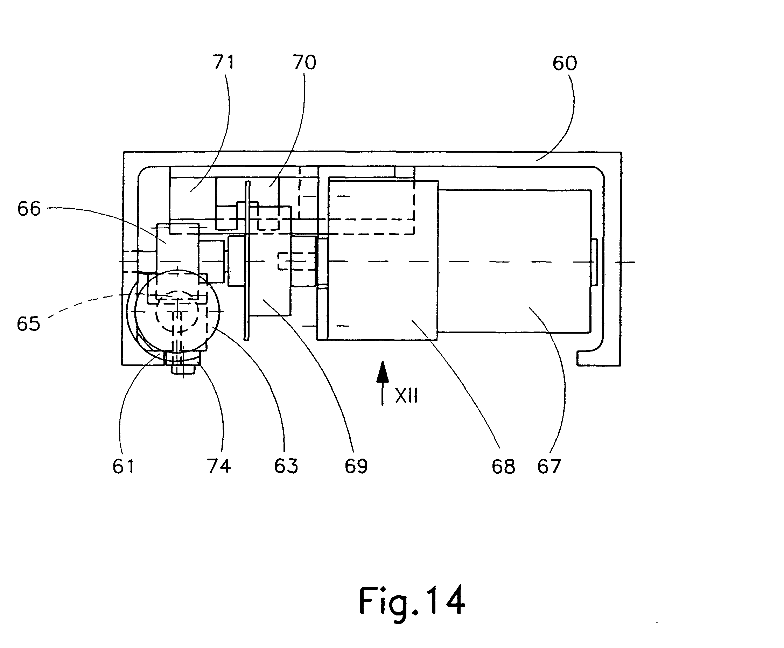

Dans la partie inférieure du châssis 1 sont aménagés des alvéoles dans lesquels sont disposés sur plusieurs (deux dans l'exemple) rangées superposées, des appareils 2 permettant l'utilisation des supports d'enregistrement. Dans le présent mode de réalisation de l'invention, ces appareils sont des lecteurs de disques compacts D (voir en particulier la figure 2) qui peuvent être de tout type disponible dans le commerce. Pour la présente description, il est important de noter que chaque lecteur 2 est muni d'un tiroir d'entrée/sortie 2a, comme cela est bien connu (voir également les figures 10 et 11 ou 12 à 14, respectivement).

Il est évident que dans le cas où les supports d'enregistrement sont d'un autre type, des cassettes magnétiques par exemple, les appareils 2 sont choisis en conséquence. Dans ce cas, l'installation permet non seulement la lecture, mais également l'écriture d'enregistrements. D'une façon générale, l'homme de métier comprendra aisément quelles seront, à cet égard, les variantes possibles de l'installation suivant l'invention, tout en restant dans le cadre de celle-ci.

Il est également à noter que l'installation comporte, de préférence, plus d'un appareil 2 (qu'ils soient à lecture seulement ou à lecture/écriture) de façon à pouvoir assurer le fonctionnement avec "fondu" sonore et/ou éventuellement optique, moyennant quoi deux morceaux puissent se suivre par l'évanescence du premier et la montée en puissance du suivant. Dans le cas représenté, douze lecteurs 2 de disques compacts sont prévus.

Enfin, on comprendra que l'invention ne se limite pas aux supports d'enregistrement brièvement évoqués ci-dessus. Au contraire, elle pourrait également s'appliquer à la lecture de supports photographiques, par exemple (diapositives, films etc.).

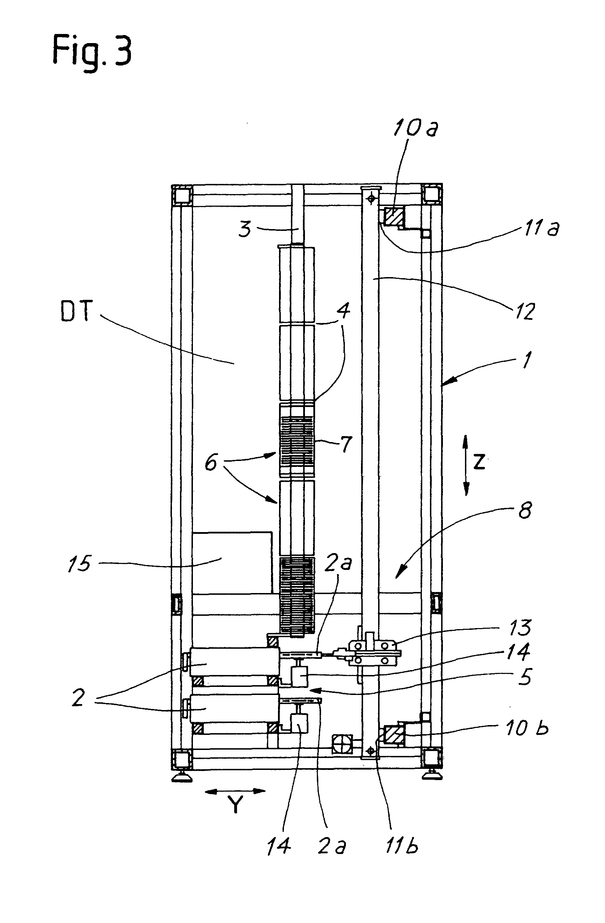

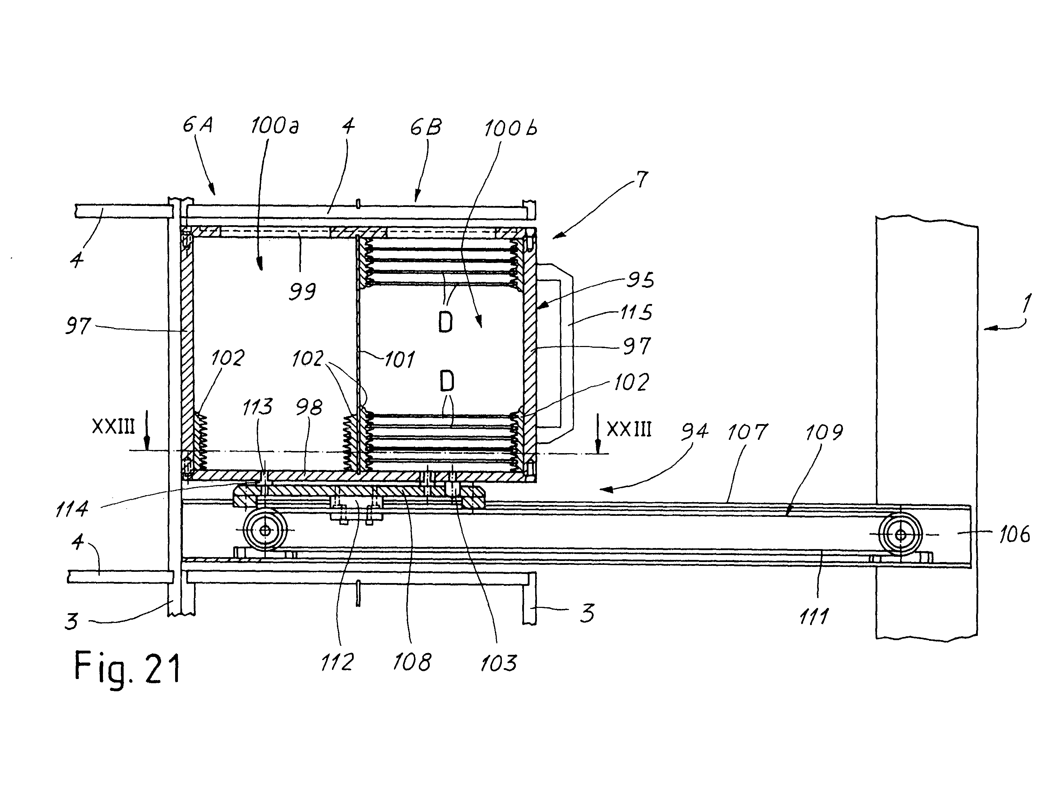

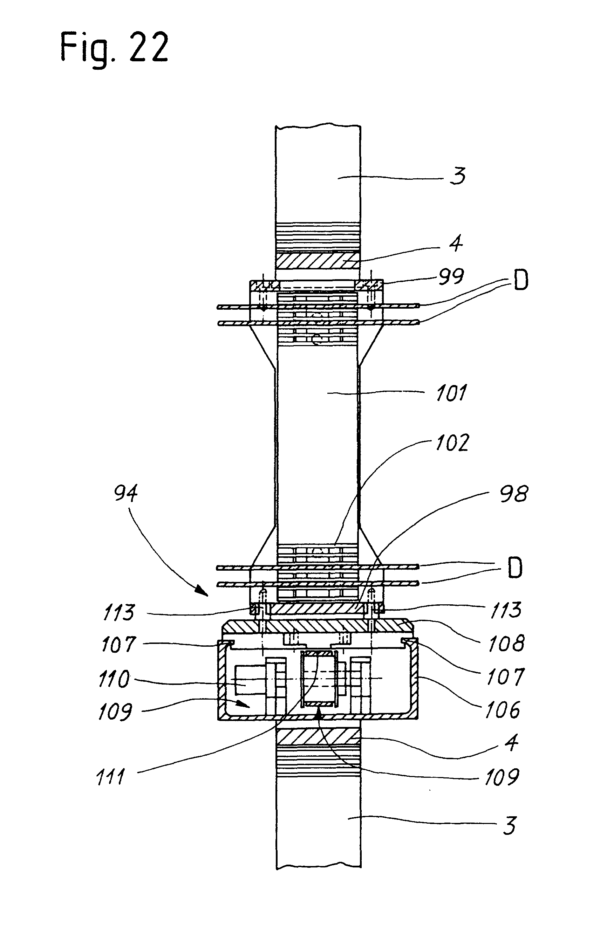

Un réseau de montants 3 et de traverses 4 est monté au dessus d'une zone 5 dans laquelle s'ouvrent les tiroirs 2a des lecteurs 2 (voir notamment la figure 3). Ce réseau qui constitue la discothèque DT proprement dite de l'appareil, délimite un certain nombre de compartiments 6 de stockage de disques compacts D, chaque compartiment pouvant contenir une soixantaine de disques, par exemple. La figure 1 montre que deux de ces compartiments, 6A et 6B, se trouvant dans l'exemple à mi-hauteur et à droite du réseau 3, 4, sont destinés à loger une cassette 7 de chargement/déchargement, les détails de celle-ci ainsi que son montage particulier dans l'installation étant décrits plus loin à propos des figures 21, 22 et 23.

L'installation comprend également un dispositif 8 de transfert de supports d'enregistrement permettant de transférer un support quelconque de la discothèque DT vers un lecteur quelconque et vice-versa pour y être lu, et également de transférer un support quelconque rangé dans la cassette 7 vers un emplacement quelconque de la discothèque DT et inversement, ceci dans le but d'opérer des chargements et des déchargements des supports.

Le dispositif de transfert 8 comporte tout d'abord un transporteur X-Z 9 comprenant un rail horizontal supérieur 10a sur lequel peut se déplacer un chariot supérieur 11a, un rail horizontal inférieur 10b sur lequel peut se déplacer un chariot horizontal inférieur 11b, une barre verticale 12 fixée sur les chariots supérieur et inférieur 11a et 11b de manière à être déplaçable en translation horizontale (axe X) et, enfin, un chariot 13 de préhension de disques monté mobile sur la barre verticale 12 (axe Z).

Le dispositif de transfert 8 comporte également, et ce pour chaque lecteur 2, un mécanisme d'entrée/sortie 14 (visible sur la figure 3) destiné à déposer un disque dans le tiroir 2a de celui-ci ou à l'en enlever.

Chaque chariot 11a, 11b et 13 se déplace sur son rail (respectivement sa barre verticale) associé au moyen de mécanismes de translation connus, à chaîne ou à ruban incorporés dans ces rails et cette barre. Des mécanismes de ce genre étant bien connus des spécialistes, on n'en donne pas une description détaillée ici. Un mécanisme approprié peut être trouvé dans le commerce auprès de la Société MHM, A-6630-Kufstein, Autriche, sous la référence L01Z. De même, la commande des mouvements des chariots est exécutée au moyen d'une unité de commande logée dans un boîtier 15 fixé au châssis 1 (à droite de celui-ci comme vu sur la figure 1), cette unité coopérant avantageusement avec un micro-ordinateur programmé O pour déterminer l'ordre de lecture des enregistrements, le chargement et le déchargement des disques etc.

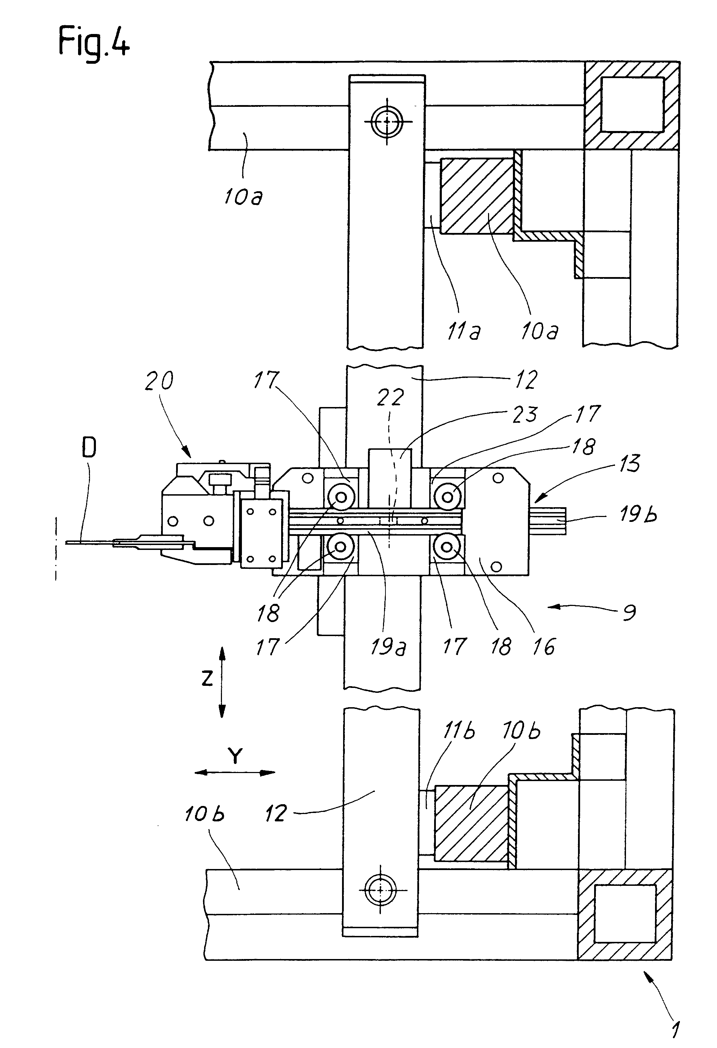

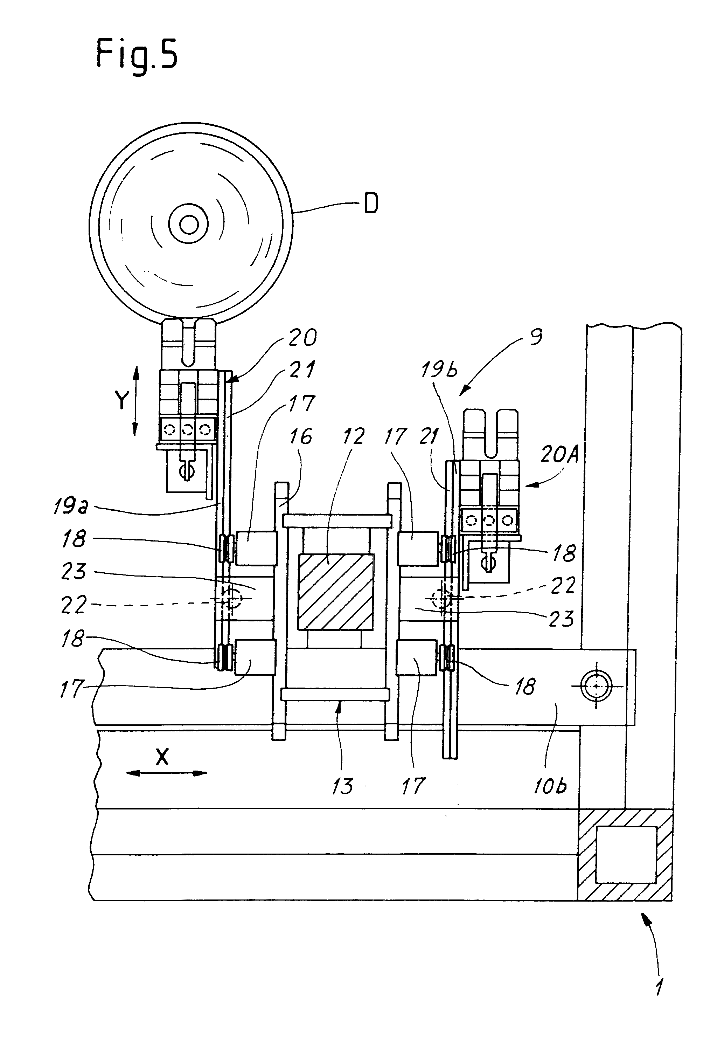

On va se référer maintenant aux figures 4 et 5 qui représentent respectivement une vue en coupe verticale et une vue en coupe horizontale du transporteur 9

Le chariot 13 comporte un cadre 16 entourant la barre verticale 12 et monté mobile sur celle-ci. De chaque côté de ce cadre sont prévues deux montures 17 qui portent des jeux de galets de roulement 18 pour un bras respectif 19a, 19b destiné à porter une pince de préhension 20. Le bras 19a ou 19b est monté mobile longitudinalement selon l'axe Y entre les jeux de galets de roulement 18 respectifs. Chaque bras 19a, 19b porte une crémaillère 21 avec laquelle engrène un pignon de sortie 22 d'un moteur d'entraînement 23. Ce moteur 23 permet le déplacement de la pince associée dans la direction de l'axe Y.

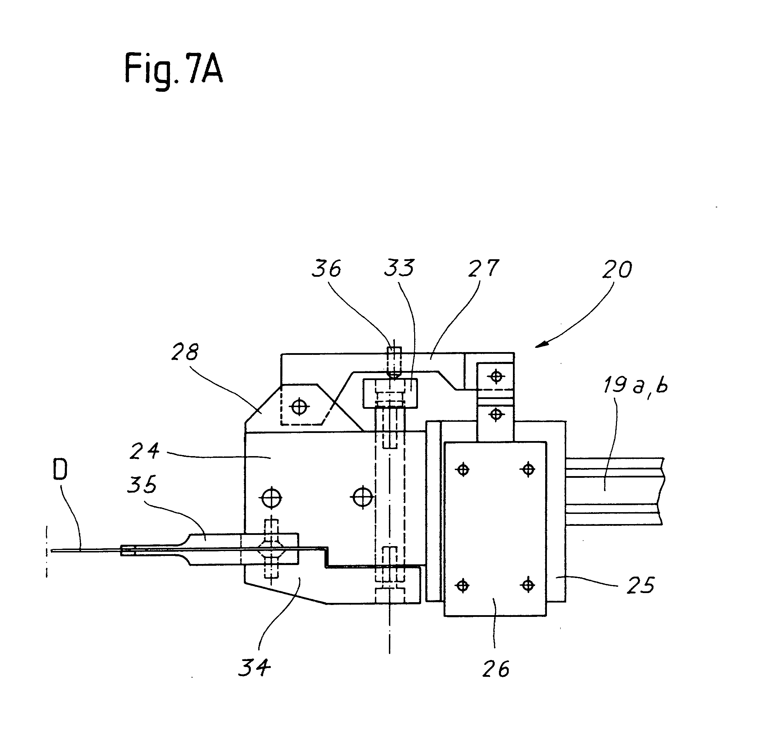

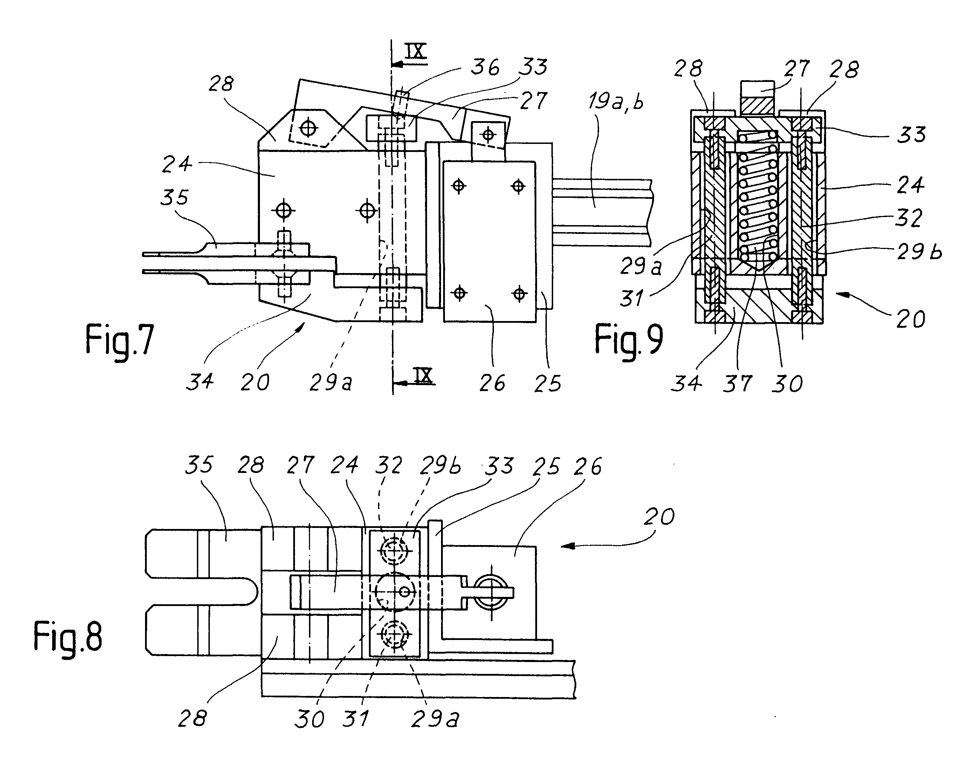

Les figures 7, 7A, 8 et 9 montrent les détails du mode de réalisation préféré de la pince de préhension 20. Un bloc de support 24 est fixé sur le bras 19a, 19b. Ce bloc porte à l'arrière une équerre 25 à laquelle est fixé un électro-aimant 26. Un levier 27 est monté articulé dans une chape 28 qui est formée à la partie supérieure du bloc 24. Ce levier est connecté au noyau de l'électro-aimant 26 de manière à pouvoir basculer vers le haut, lorsque l'électro-aimant est excité. Trois trous cylindriques 29a, 29b et 30 dont le trou intermédiaire 30 est borgne, sont percés dans le bloc 24.

Les trous extérieurs 29a et 29b traversent le bloc 24 de part en part et reçoivent des tiges cylindriques 31 et 32 raccordées par vissage d'une part, en haut, à une barrette transversale 33 et d'autre part, en bas, à la mâchoire mobile 34 de la pince de préhension 20. L'autre mâchoire 35 de cette pince est fixée dans le bloc 24. Une vis de réglage 36 est vissée dans le levier 27 et s'appuie sur la barrette transversale 33 Elle est destinée à ajuster la force de serrage de la pince.

Un ressort de rappel 37 est engagé dans le trou borgne 30 et grâce son appui sur le levier 27, il sollicite la pince 20 à la fermeture, lorsque l'électro-aimant 26 n'est pas excité (figure 7A). Dans le cas contraire, l'excitation de l'électro-aimant 26 provoque le basculement du levier 27 vers le bas, la descente de l'équipage formée par les tiges 31 et 32, la barrette 33 et la mâchoire 34 à l'encontre de l'action du ressort 37 et, par suite l' ouverture de la pince 20.

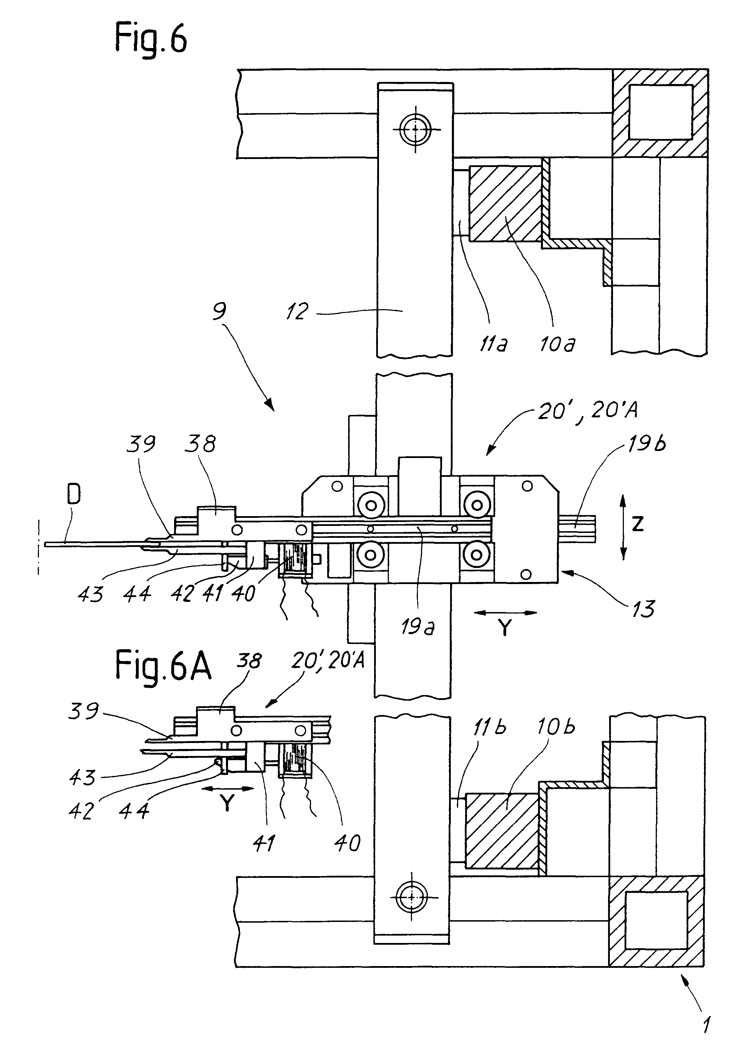

On va maintenant se référer aux figures 6 et 6A qui représentent un autre mode de réalisation du transporteur 9 qui diffère du transporteur des figures 4 et 5, par la forme des pinces de préhension. Celles-ci portent ici les références 20' et 20'A et comprennent chacune un bloc de montage 38 fixé en bout du bras 19a ou 19b et dans lequel est formée une mâchoire fixe 39. Le bras 19a, 19b porte également un électro-aimant 40 qui commande le déplacement, dans la direction de l'axe Y, d'un coulisseau 41 portant un poussoir 42 en forme de coin. Une mâchoire mobile 43, montée coulissant verticalement sur le bloc 38, porte une anse 44 dont la barre inférieure horizontale coopère avec la pente oblique du poussoir 42.

Normalement, ce poussoir 42 est élastiquement sollicité vers l'arrière en direction de l'électro-aimant 40, tandis que lorsque celui-ci est excité, le poussoir 42 se déplace vers l'avant et pousse la mâchoire mobile 43 vers le bas, grâce à l'anse 44 en contact de la pente du poussoir.

On va maintenant se référer aux figures 10 et 11 pour décrire le mode de réalisation préféré du mécanisme d'entrée/sortie 14.

Ce mécanisme comporte une plaque de montage 45 fixée sur le châssis 1 et portant un électro-aimant 46. Un levier en L 47 est articulé sur cette plaque de montage autour d'une broche 48 qui en est solidaire et dont l'axe s'étend dans la direction de l'axe Y.

L'une des branches 47a du levier 47 est fourchue à son extrémité et s'adapte autour d'une goupille horizontale 49 qui traverse une fente verticale 50 ménagée dans un bloc de guidage 51 solidaire de la plaque de montage 45. Ce bloc est fixé sur la plaque 45 et est traversé par un trou cylindrique 52 dans lequel est reçue une tige de manoeuvre 53. Cette tige porte à son extrémité supérieure un bouton 54 susceptible de s'ajuster dans l'ouverture centrale d'un disque compact D et comprenant un épaulement 55 sur lequel celui-ci peut venir reposer.

La fente verticale 50 communique sur toute sa hauteur avec le trou cylindrique 52, tandis que la goupille 49 est emmanchée à force dans la tige 53. De la sorte une rotation du levier 47 autour de son axe déplace la tige 53 verticalement.

Un amortisseur 56 est fixé dans le bloc de guidage 51 et coopère avec la deuxième branche 57 du levier 47. Celui-ci est couplé au noyau de l'électro-aimant 46 au moyen d'une biellette de couplage 58 et d'une broche 59 implantée en travers du levier 47.

Sur la figure 10, la pince de préhension 20 ou 20A vient juste d'amener un disque compact D au dessus du tiroir 2a d'un lecteur 2, ce tiroir ayant été préalablement ouvert. L'électro-aimant 46 est excité et le levier 47 tourne dans le sens des aiguilles d'une montre pour soulever la tige 53 et amener le bouton 55 en dessous du disque D. Ce mouvement de la tige est amorti par l'amortisseur 56, afin de ne pas risquer une éjection de celui-ci de la pince de préhension 20 ou 20A. Dès que le disque D est repris par la tige 53, l'électro-aimant 45 est désexcité, ce qui ramène la tige avec le disque vers le bas par la simple action de la gravité. Le disque D est alors déposé avec douceur dans le tiroir 2a (figure 11), et la tige 53 est escamotée en dessous de ce tiroir qui peut ainsi se refermer, en plaçant le disque D dans le lecteur pour la lecture de son enregistrement. L'opération de déchargement se déroule exactement en sens inverse.

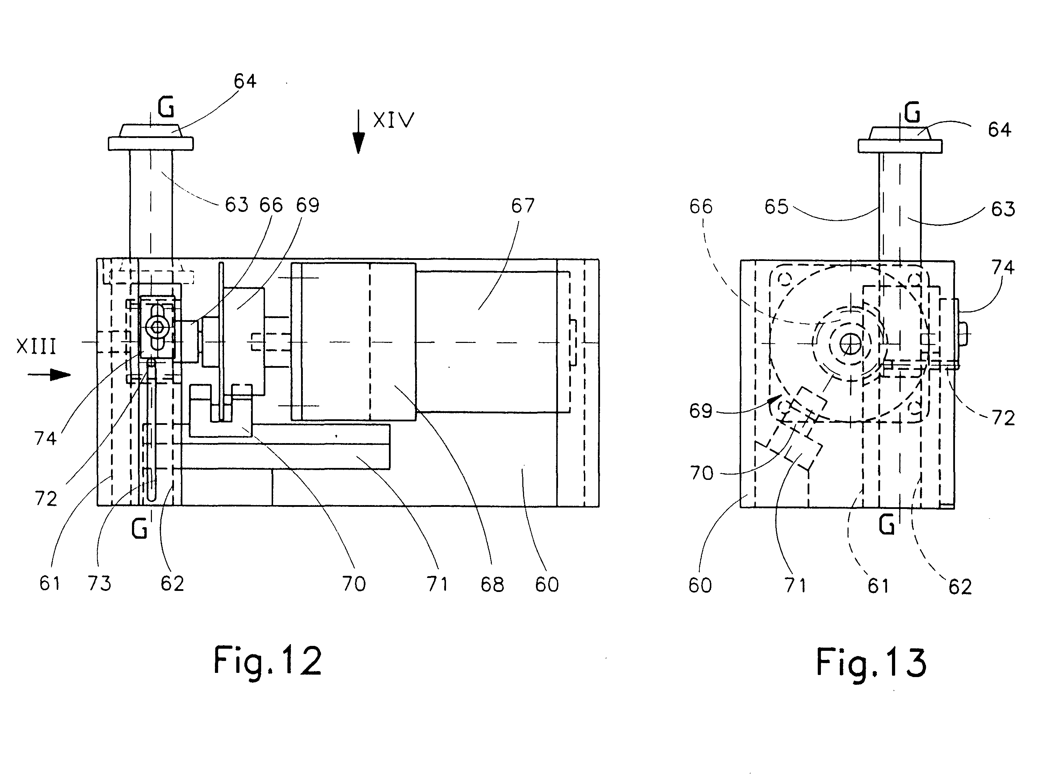

On va se référer maintenant aux figures 12 à 14 qui représentent un autre mode de réalisation d'un mécanisme de transfert des support d'enregistrement.

Ce mécanisme comprend une monture 60 fixée sur le châssis 1 et présentant la forme d'un U dont l'âme et les ailes s'étendent verticalement (voir figure 12). La section circulaire et d'axe G-G vertical. Une tige 63 ajusté dans le passage 62 peut coulisser verticalement dans celui-ci. Elle porte à son extrémité supérieure un bouton 64 de support des disques compacts. Une crémaillère 65 s'étendant verticalement est usinée sur la tige 63 et engrène avec un pignon 66 monté à rotation dans la monture 60. Ce pignon 66 est couplé à un moteur d'entraînement 67 par l'intermédiaire d'un réducteur 68 et d'un embrayage à friction 69. Un détecteur photo-électrique 70 est destiné à détecter la position de la tige 63 et fixé également dans la monture 60. Il est connecté électriquement au boîtier 15 (figure 1) qui transmet les informations adéquates au micro-ordinateur O (figure 1). Le moteur électrique d'entraînement 67 est connecté de la même façon au boîtier 15.

Une goupille de positionnement 72 fichée dans la tige 63 coulisse dans une fente 73 pratiquée dans le guide 62. Cette goupille 72 coopère avec une butée réglable 74 destinée à limiter la course vers le haut de la tige 63.

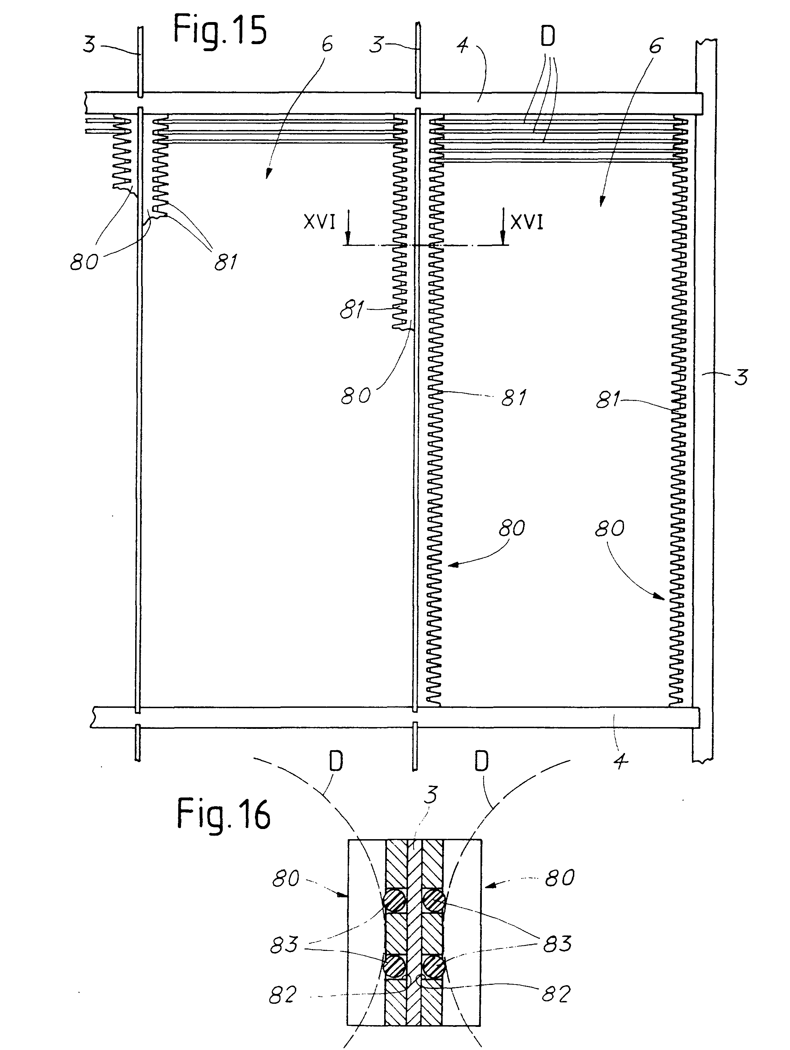

On va maintenant se référer aux figures 15 et 16 qui représentent par une première variante selon l'invention, comment les disques compacts D peuvent être maintenus dans leur compartiment 6 de la discothèque DT.

Chaque compartiment 6 est délimité par des montants 3 et des traverses 4 dont la largeur, c'est à dire la dimension dans le sens de l'axe Y, est nettement inférieure au diamètre des disques D (voir figure 16). Des peignes 80, usinés par exemple dans des lamelles en plastique, sont fixés sur les parois latérales de chaque compartiment 6. Chaque paire de dents 81 en regard des peignes 80 de chaque compartiment 6 définit ainsi un emplacement de rangement pour un disque compact D. Dans les faces des peignes tournées vers les montants 3, sont ménagées deux rainures parallèles 82 dans lesquelles sont disposés des cordons 83 en une matière élastique. Les rainures 82 ont une profondeur telle qu'elles entament légèrement les dents 81. De la sorte, les cordons 83 qui ont un diamètre égale à la profondeur des rainures débordent légèrement du fond des dents 81. Par ailleurs, la largeur des compartiments 6 est telle que la distance entre le fond des dents 81 en regard sur les parois latérales de ce même compartiment 6 corresponde au diamètre des disques compacts D. Il en résulte, moyennant un montage simple, un coincement efficace des disques dans les compartiments, leur mise en place ou leur dégagement de leur emplacement respectif ne demandant qu'un minimum de force de la part de la pince de préhension 20 ou 20A. En effet, cette opération ne demande qu'une légère déformation des cordons se trouvant du côté de l'insertion ou du retrait du disque qui, une fois en place, est maintenu par deux petites parties de sa périphérie retenues par les cordons 83.

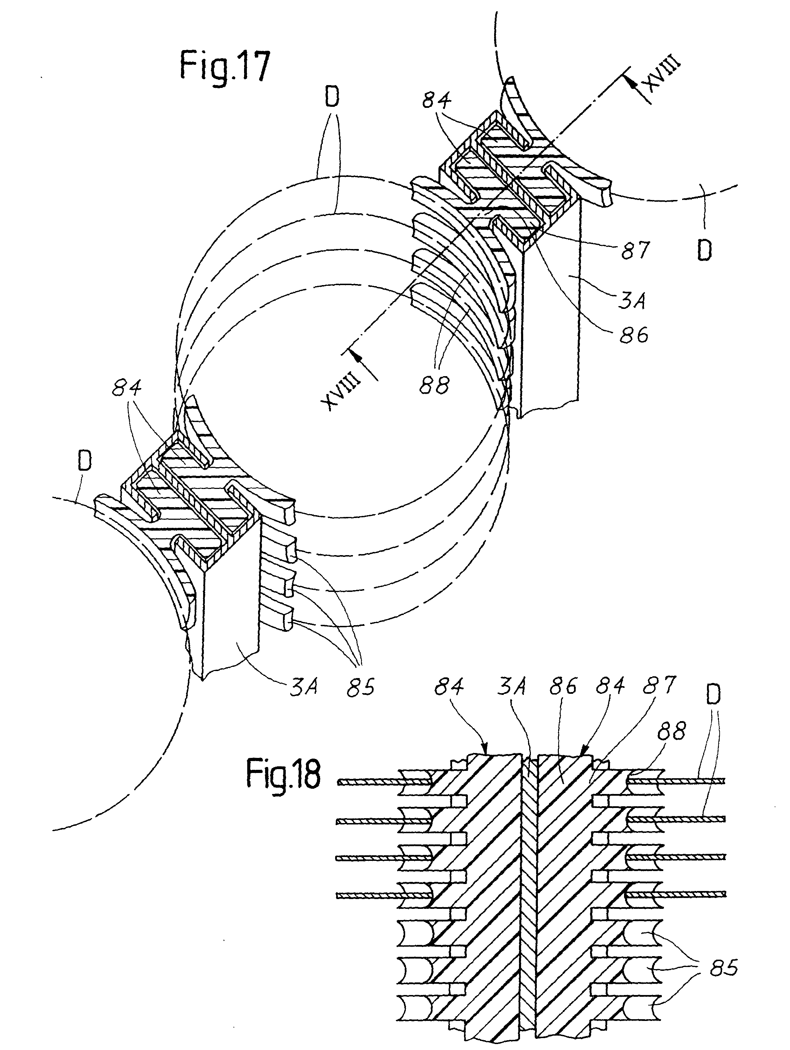

Les figures 17 et 18 montrent une autre variante d'un dispositif de maintien des disques compacts D dans leurs compartiments 6. Dans ce cas, chaque montant 3A de la discothèque DT est réalisé sous la forme d'un double profilé en C dans les espaces longitudinaux duquel sont insérés des peignes 84 réalisés d'une seule pièce, par moulage de caoutchouc par exemple. Chaque dent 85 d'un tel peigne comporte une racine 86 qui est raccordée à une base 87, insérée dans la partie correspondante du double profilé 3A. En outre, chaque dent 85 a une forme courbe dans le plan horizontal et sa face 88 tournée vers l'extérieur est légèrement concave. De la sorte, les disques D peuvent être retenus, tant horizontalement que verticalement et être mis en place et retirés par une légère déformation élastique des dents 85, sans demander, là-encore, un effort important à la pince de préhension 20 ou 20A.

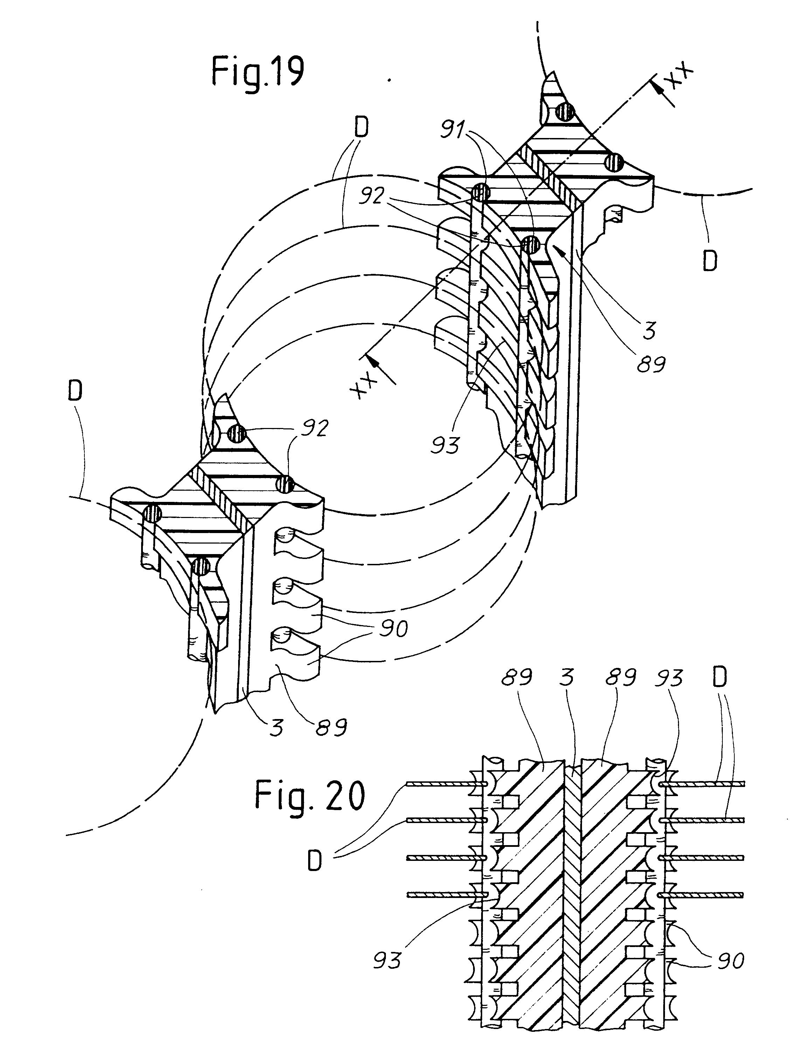

Les figures 19 et 20 montrent une autre variante d'un dispositif de maintien des disques dans la discothèque DT.

Dans ce cas, on retrouve des montants 3 formés de simple plaques, tandis que des profilés 89, en matière plastique moulée par exemple, sont fixés à ces plaques, par exemple par collage. Les profilés 89 ont également une forme de peigne dont les dents 90 sont légèrement cintrées dans le plan horizontal. Chaque peigne 89 présente deux rainures longitudinales 91 dans lesquelles sont maintenus respectivement deux cordons 92, en matière élastique et débordant légèrement de la face extérieure 93 des dents 90. En outre, cette face de chaque dent est concave.

Cet agencement, comme les deux précédents, permet de maintenir convenablement les disques compacts en place sans solliciter pour autant la pince de préhension 20 ou 20A lors des opérations de mise en place ou de retrait.

Les figures 21, 22 et 23 montrent le mode de réalisation préféré de la cassette 7 de chargement/déchargement de l'installation suivant l'invention. On rappelle que cette cassette est placée dans deux compartiments particuliers 6A et 6B du réseau de l'installation constituant la discothèque DT (voir la figure 1).

La cassette 7 est associée à un mécanisme de manipulation 94 destiné à en faciliter la mise en place dans l'installation et son retrait de celle-ci.

La cassette 7 proprement dite comporte un cadre 95 composé de deux montants 97, d'un fond 98 et d'une plaque supérieure 99. Ce cadre est divisé en deux compartiments 100a et 100b par une cloison de séparation 101. Celle-ci et les faces internes des montants 97 sont garnies de peignes 102 qui peuvent être réalisés conformément aux variantes qui en ont été décrites ci-dessus à propos des figures 15 à 20, respectivement.

Le fond 98 présente quatre trous filetés dans lesquels sont vissés des pieds 103 de pose de la cassette 7 sur une surface quelconque, celle d'une table par exemple, pour permettre de la garnir de disques D ou d'en retirer ceux-ci, en dehors de l'enceinte de l'installation.

Le fond 98 présente également trois trous de positionnement 104 et 105a, 105b dont l'un, 104, est circulaire et dont les deux autres, 105a et 105b, sont oblongs.

Un rail 106 à profilé en forme de U, est monté dans les compartiments 6A et 6B dans la direction de l'axe X. Ce rail s'étend jusqu'à un montant du châssis 1, dans l'exemple décrit ici du côté droit de l'installation, et est fixé à ce montant, comme représenté sur les figures 1 et 21.

Les ailes du rail 106 sont recourbées vers l'intérieur pour former deux glissières 107 sur lesquelles est ajustée une palette 108, montée mobile sur le rail 106 dans la direction de l'axe X. Un mécanisme de transport 109 est monté dans le rail 106. Il comporte un moteur d'entraînement 110 couplé à une courroie sans fin 111 qui s'étend sur pratiquement toute la longueur du rail 106. La palette 108 est fixée à la courroie 111 par une monture 112.

Des tenons de positionnement 113 sont vissés dans la palette 108 et sont destinés à s'ajuster dans les trous de positionnement respectifs 104 et 105a, 105b. Chaque tenon est pourvu d'un épaulement radial 114 afin de maintenir un léger espace entre la palette 108 et la cassette 7, lorsque celle-ci est placée dans l'installation.

Une poignée latérale 115, et éventuellement une poignée escamotable (non représentée) prévue sur la plaque supérieure 99, permettent d'assurer un maniement commode de la cassette 7.

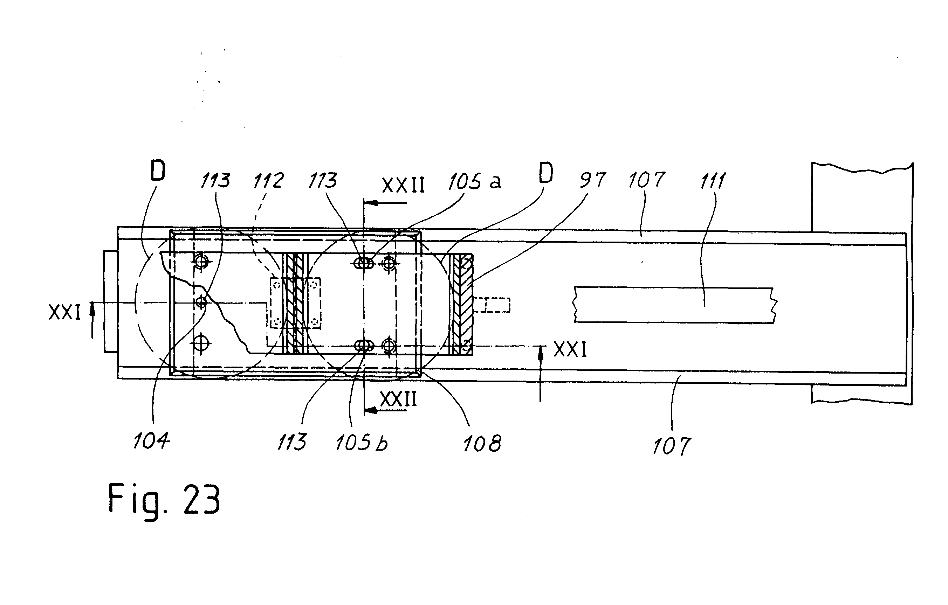

Grâce à cet agencement, la cassette 7 peut être déplacée vers la droite à la demande de l'opérateur à partir de sa position de travail (représentée sur les figures 21 et 23) vers une position dans laquelle l'opérateur peut l'enlever de l'installation et la remplacer éventuellement par une autre cassette identique à celle qui vient d'être enlevée.

L'opérateur peut alors enlever les disques D contenus dans la cassette, c'est à dire ceux qui ne doivent plus faire partie de la discothèque DT, puis replacer de nouveaux disques dans la cassette qui doivent en faire partie par la suite. On comprend que, pendant ce temps, l'installation elle-même peut continuer à fonctionner normalement sur la base du fond de disques contenu dans la discothèque DT. Il peut être avantageux d'adjoindre à l'installation plusieurs cassettes 7, de manière à pouvoir préparer des chargements à l'avance. Toutes ces cassettes peuvent alors être insérées les unes après les autres dans les compartiments 6A et 6B de l'installation pour que le transfert des disques D puisse se faire vers la discothèque DT ou inversement. On constate donc que l'installation donne à l'opérateur une grande souplesse d'utilisation et de chargement/déchargement des disques.

On comprend également que le transporteur 9 peut être utilisé non seulement pour assurer les transferts entre les lecteurs 2 et la discothèque DT et inversement, mais également pour assurer ceux devant se faire entre la discothèque DT et la cassette 7 en place dans les compartiments 6A et 6B et inversement, le transporteur fonctionnant dans ce dernier cas exactement selon le même principe que dans le premier cas.

Comme déjà indiquée ci-dessus, l'installation peut être commandée par un ordinateur O, convenablement programmé pour la tenue à jour d'un catalogue des disques de la discothèque DT, avec toutes les données relatives à ces disques. On sait que les disques compacts ont un numéro d'identification qui peut être stocké dans l'ordinateur accompagné des coordonnées de l'emplacement que le disque a dans la discothèque DT. Les circuits contenus dans le boîtier électronique 15 sont conçus pour pouvoir commander les moyens moteur du transporteur 9 de telle façon que les pinces de préhension 19a et 19b puissent être placées devant tout emplacement de la discothèque DT ou tout lecteur 2 et y faire le travail de chargement/déchargement. Il en est de même de tout emplacement de la cassette 7. Les composants tels que les moteurs d'entraînement, interrupteurs de fin de course, freins, électro-aimants et analogues, ainsi que les circuits d'interface et de commande contenus dans le boîtier 15 nécessaires pour exécuter les tâches de tenu à jour de la discothèque DT, peuvent être prévus sans autre par les spécialistes, comme peut d'ailleurs être conçu le logiciel sur lequel doit tourner l'ordinateur de commande O.

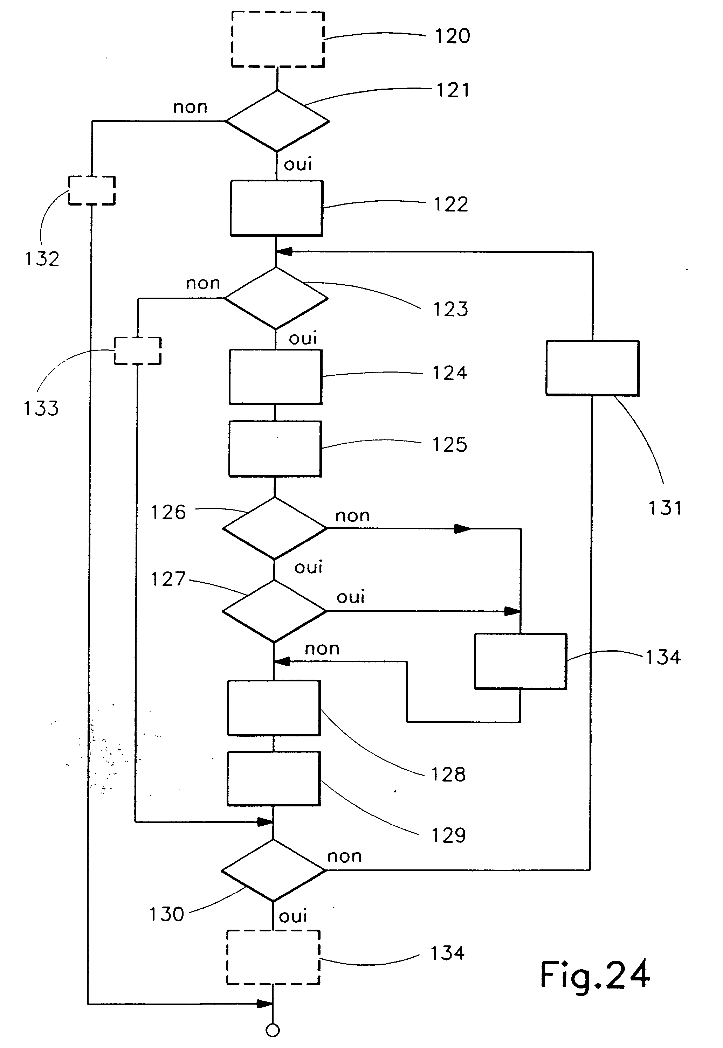

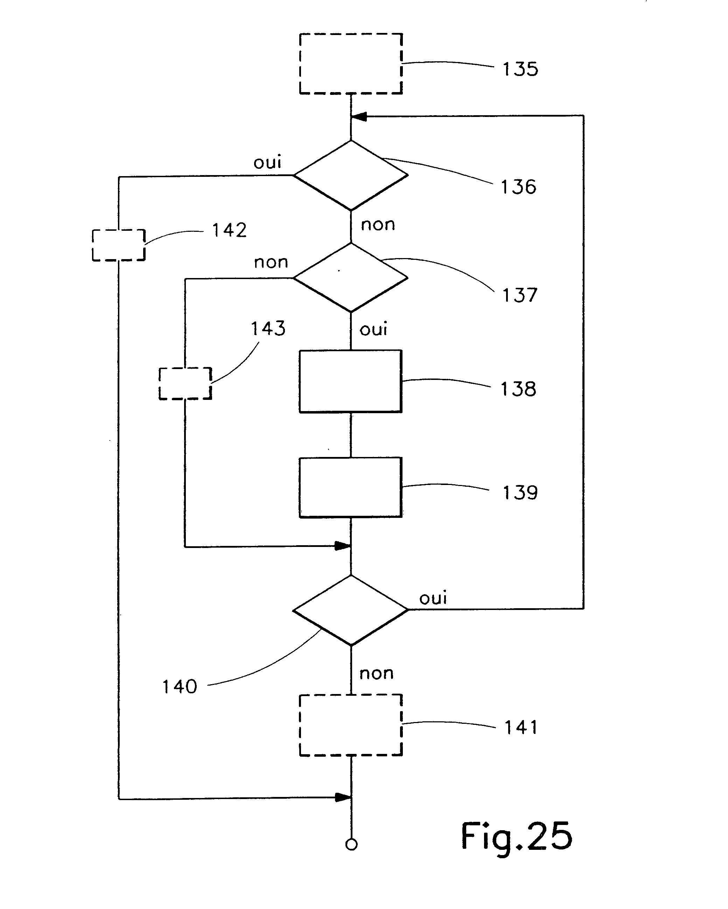

Les figures 24 et 25 montrent un organigramme sur la base duquel une partie de ce logiciel peut être écrit.

La figure 24 décrit la procédure de chargement des disques D dans la discothèque DT

Avant de retirer la cassette 7 se trouvant au moment considéré dans l'installation, l'opérateur aura pris soin, à l'aide d'un programme approprié stocké dans l'ordinateur de commande O, de charger cette cassette des disques D qui ne sont plus nécessaires dans la discothèque DT.

On suppose que la discothèque DT est encore entièrement vide et que tous ses emplacements doivent être pourvus d'un exemplaire. L'opérateur charge une cassette vide 7 avec des disques, opération qui est faite hors de l'installation. Il introduit les références des disques et d'autres informations utiles les concernant dans l'ordinateur O (opération 120, figure 24).

La cassette 7 ainsi chargée est placée sur la palette 108 qui, auparavant, a été amenée à sa position adéquate (position de droite sur les figures 1 et 21). L'opérateur actionne le moteur 110 qui replace la cassette 7 dans sa position de chargement de la discothèque DT.

L'ordinateur O a constamment en mémoire l'état de chaque emplacement de la discothèque DT, le cas échéant, complété par les coordonnées du disque D qui est rangé à cet emplacement. Dans l'exemple décrit, la mémoire ne contient encore aucune donnée relative aux disques.

Le programme interroge donc la mémoire de l'ordinateur pour savoir si une place est libre. Dans le cas présent (opération 121), la réponse est affirmative et le dispositif de transfert 8 est commandé de manière qu'une pince de préhension 20 ou 20A aille chercher le premier disque D dans un emplacement de la cassette 7 désigné par l'ordinateur selon la liste établie en 120 (opération 122).

Comme déjà indiqué ci-dessus et de façon connue en soi, l'installation est pourvue de divers organes, tels qu'interrupteurs de fin de course, dispositifs photo-électriques et autres organes analogues, permettant de renseigner à tout moment l'ordinateur O sur l'état des organes mobiles de l'installation, tels que le dispositif de transfert 8, l'ouverture ou la fermeture des pinces de préhension 20 ou 20A, l'état des mécanismes de levage 14, la position des tiroirs des lecteurs 2 etc, les signaux provenant de ces éléments étant appliqués à l'ordinateur O par l'intermédiaire d'interfaces qui communiquent tous avec l'interface placée dans le boîtier 15.

Ainsi, pendant l'opération 123 (figure 24), l'ordinateur O peut constater, à l'aide d'une pince de préhension 20 ou 20A du dispositif de transfert 8, si un disque compact D est présent au premier emplacement de la cassette 7.

Si la réponse est affirmative, la pince de préhension 20 prend le disque D correspondant et le transporteur 9 l'amène au-dessus d'un mécanisme d'entrée/sortie 14 appartenant à l'un des lecteurs 2. Ce mécanisme 14 place le disque dans le tiroir 2a, alors ouvert de ce lecteur (opération 124). Le tiroir est fermé et le numéro de catalogue du disque est lu et transféré à l'ordinateur O (opération 125). A l'achèvement de cette lecture (opération 126), l'ordinateur O vérifie si le numéro de catalogue est déjà présent ou non dans sa mémoire (opération 127).

L'opération 130 consiste à vérifier si la fin de la liste de la cassette 7 (établie par l'opération 120) est atteinte. Si non, les opérations sont reprises par la saisie d'un nouveau disque dans la cassette 7 (opération 131) et ainsi de suite jusqu'à ce que la cassette soit entièrement vide.

Entre temps, l'opérateur a pris soin de charger une autre cassette d'un nouveau jeu de disques qui, après remplacement de l'ancienne cassette maintenant vide par la cassette chargée, subira le même sort que le précédent jeu.

Les opérations peuvent alors se répéter jusqu'au chargement complet de la discothèque DT.

Si la réponse au test de l'opération 131 est négative, l'ordinateur O indique une erreur (opération 132) et le programme est interrompu.

Si la réponse au test de l'opération 123 est négative, l'ordinateur O indique une erreur (opération 133) et le programme passe au test de l'opération 130 pour vérifier si la fin de la liste établie par l'opération 120 est atteinte.

Si la réponse au test 127 est positive, cela veut dire qu'un disque avec la même référence de catalogue est déjà présent dans la discothèque DT. Une double présence d'un disque donné peut être utile pour le personnel chargé du programme sonore à diffuser, par exemple pour pouvoir faire un fondu sonore sur deux plages d'un disque ayant la même référence de catalogue.

Toutefois, le programme passe alors à une opération 134 au cours de laquelle un numéro d'identification particulier est attribué à ce double exemplaire du disque. Après l'opération 134, le programme passe alors à l'opération 128 pour ranger ce disque à son emplacement désigné.

L'ensemble du programme de chargement s'achève par l'opération 134 au cours de laquelle l'ordinateur O marque d'un signe de disponibilité toutes les références des disques chargés qu'il garde en mémoire.

Lorsque tous les disques souhaités sont chargés dans la discothèque DT (à noter que d'emblée, l'on peut décider de ne pas la charger complètement), l'opérateur peut composer un programme sonore à diffuser. Pour ce faire, l'ordinateur O est programmé de manière d'une part à introduire dans un ou plusieurs lecteurs 2, les disques à lire et d'autre part à commander ces lecteurs pour qu'ils lisent, à l'instant souhaité, le ou les plages du ou des disques faisant partie du programme sonore à diffuser.

D'après la description détaillée qui précède, il est superflu de décrire en détail les opérations qui consistent à charger et à décharger les lecteurs 2 avec les disques se trouvant dans la discothèque.

En effet, ces opérations qui servent à exécuter un programme sonore préalablement composé, peuvent être programmées à l'aide de l'ordinateur O; ainsi, il est possible de composer, par exemple, un programme quotidien pour la diffusion d'une journée d'illustration sonore d'un programme de radiodiffusion. Comme l'installation comporte un nombre important de lecteurs 2 (par exemple douze dans le cas représenté, nombre qui peut être différent), il est envisageable de diffuser plusieurs programmes à la fois, les changements de disques requis par ces programmes pouvant tous être exécutés à l'aide du dispositif de transfert 8 décrit ci-dessus.

Les spécialistes comprendront que, dans d'autres applications, celles d'une bibliothèque informatisée par exemple, les mêmes principes s'appliquent mutatis mutandis.

On comprend également que, moyennant un protocole de priorité convenablement programmé dans l'ordinateur O, le chargement des disques dans la discothèque peut se faire au cours du déroulement même d'un programme sonore à diffuser. Ceci constitue l'un des avantages décisif de l'installation suivant l'invention. Bien entendu, la priorité de transfert des disques doit alors toujours être donnée à ceux des disques qui doivent être utilisés pour le programme sonore à diffuser.

La figure 25 représente l'organigramme d'un programme destiné à être exécuté lorsque des disques D doivent être enlevés de la discothèque DT.

Pour ce faire, l'opérateur place une cassette 7 vide dans l'installation de la manière déjà décrite à propos des figures 21, 22 et 23.

En 135, l'opérateur crée la liste des disques à retirer en introduisant les références de ces disques dans l'ordinateur.

Au début de l'exécution de ce programme informatique, l'ordinateur O vérifie d'abord en 136 si la discothèque DT est vide ou non.

En cas de réponse négative à ce test le programme passe au test suivant en 137, pour vérifier si le premier disque de la liste établie en 135 se trouve dans la discothèque DT. En cas de réponse positive à cette question, l'ordinateur O commande un cycle de transfert du dispositif de transfert 8 pour qu'il aille chercher le disque en question à l'emplacement où il se trouve dans la discothèque et qu'il place ce disque dans le premier emplacement libre de la cassette 7 (opération 138).

Puis, l'ordinateur O efface la référence de ce disque de la liste des disques présents dans la discothèque (opération 139).

Le programme effectue alors un test en 140 pour vérifier, si d'autres disques sont encore à enlever selon la liste établie en 135. Si oui, une réitération est faite sur les opérations 126 et 140, jusqu'à ce que cette liste soit épuisée. Dès que ceci se produit, la réponse au test 139 sera négative et le programme passe alors à une opération en 141 consistant à marquer les disques retirés (dont les références sont de préférence stockées dans la mémoire de l'ordinateur) comme étant absents dans la discothèque DT.

Il est évident pour les spécialistes que le déroulement des programmes illustrés par leurs organigrammes respectifs aux figures 24 et 25 peuvent être conçus de telle façon qu'une cassette 7 chargée de disques D à placer dans la discothèque DT puisse progressivement être vidée, en même temps qu'elle soit chargée de disques D qui doivent être ôtés de la discothèque.

Si les réponses aux tests 136 et 137 sont respectivement positive et négative, le programme indique une erreur (opérations 142 et 143).

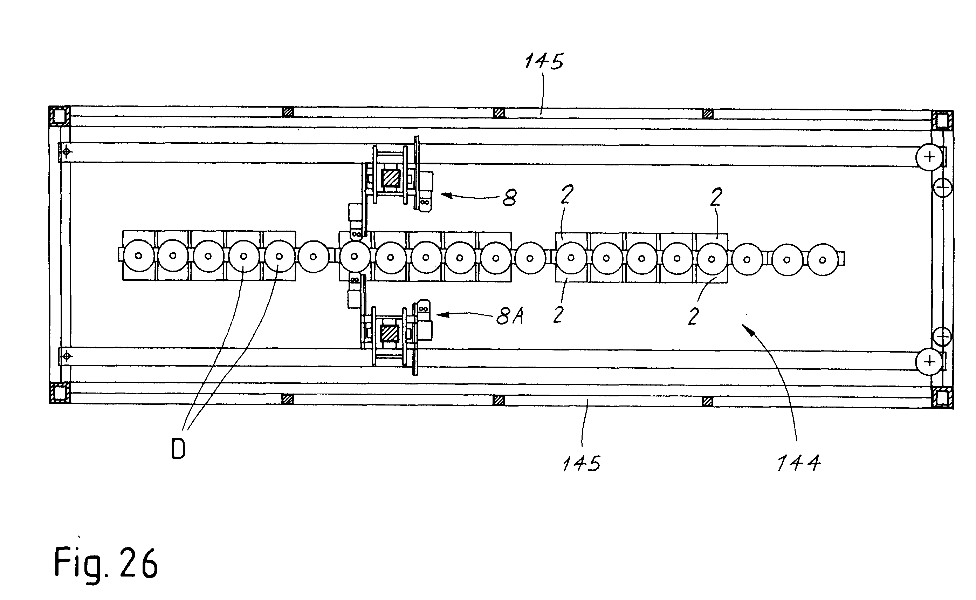

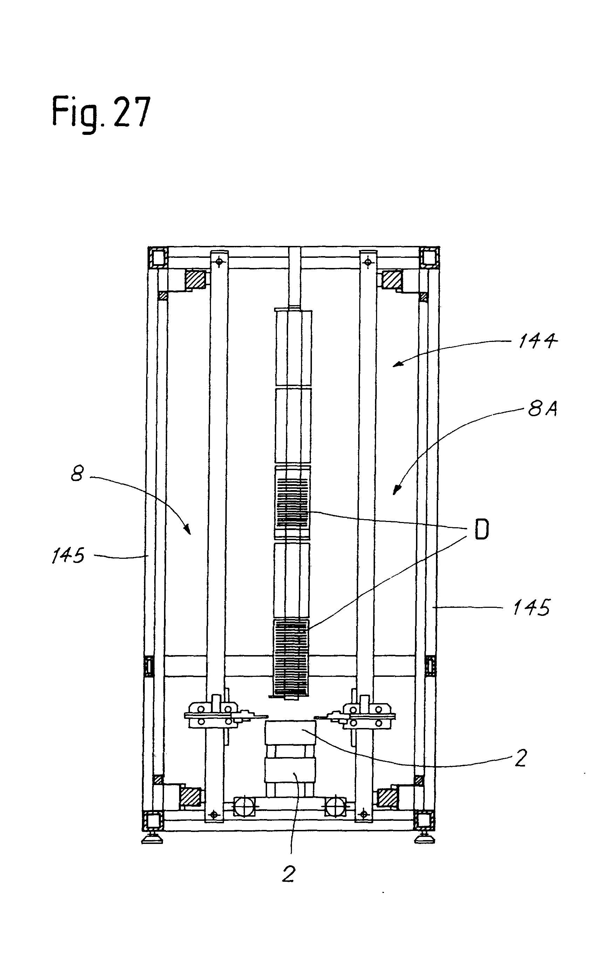

On va maintenant se référer aux figures 26 et 27 qui représentent un mode de réalisation avantageux de l'installation suivant l'invention.

Dans ce cas, la discothèque DT ainsi que la batterie de lecteurs 2 sont placées dans une enceinte 144, symétriquement par rapport à ses deux grandes parois verticales 145. Cette installation comporte en outre deux dispositifs de transfert 8 et 8A placés respectivement le long de chacune de ces parois et desservant tous deux la même discothèque DT.

Les lecteurs 2 peuvent alors être placés sous la discothèque DT, de manière à pouvoir être chargés et déchargés respectivement par les dispositifs de transfert 8 et 8A. Ceux-ci sont, par ailleurs, identiques à celui décrit ci-dessus à propos des figures 4, 5 et 7 à 9.

L'avantage de ce mode de réalisation consiste en ce que les opérations de transfert des disques peuvent être exécutées deux fois plus vite ce qui peut être important lorsque la fréquence d'utilisation de nombreux disques différents est élevée et/ou que la capacité de stockage de la discothèque est grande.

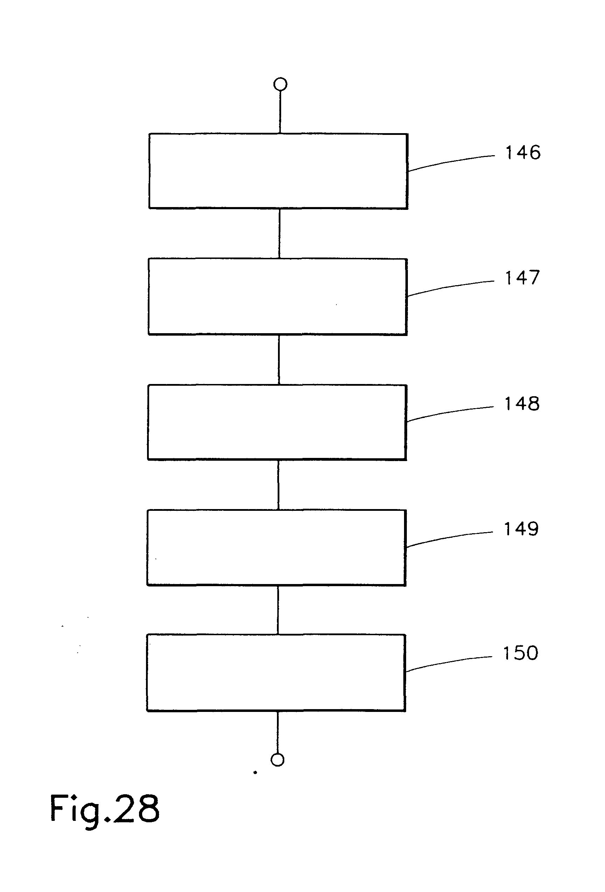

La figure 28 illustre une caractéristique avantageuse de l'invention concernant la construction du dispositif de transfert 8. On rappelle en se référant aux figures 4 et 5, que ce dispositif comporte un chariot de préhension 13 équipé de deux pinces de préhension 20 et 20A.

La figure 28 représente un organigramme très simplifié d'un programme de commande de ces pinces 20 et 20A visant à rendre les opérations de transfert des disques D aussi rapides que possible. Ce programme s'applique d'ailleurs, que l'échange se fasse pour charger/décharger un lecteur 2 ou pour remplir ou vider tout ou partie de la discothèque par l'intermédiaire de la cassette 7.

Ainsi en ne considérant que l'échange de disques dans un lecteur 2, en 146, l'ordinateur O commande le dispositif de transfert 8 de manière que la pince 20 saisisse un disque D "nouveau". En 147, le dispositif de transfert 8 est commandé de manière à se déplacer vers un lecteur 2.

En 148, la pince 20A est alors commandée pour reprendre "l'ancien" disque D du lecteur 2 après quoi la pince 20 place le "nouveau" disque dans le lecteur (opération 149). Puis le dispositif de transfert 8 est commandé de manière que "l'ancien" disque soit rangé dans son emplacement approprié de la discothèque (opération 150).

Bien entendu, la présence de deux pinces 20 et 20A sur le même dispositif de transfert 8 permet aussi, moyennant un trajet minimum du chariot 13, de charger deux lecteurs 2 à partir de deux emplacements différents de la discothèque, chaque pince transférant alors son disque pour un chargement ou un déchargement en même temps que l'autre pince.

## Revendications

1. Installation destinée à l'enregistrement et/ou la lecture de supports d'information sonores, vidéo, informatisées et/ou photographiques, etc., tels que de bandes magnétiques, des disques sonores ou vidéo, des diapositives et analogues, du type comprenant:
- des moyens de stockage (3, 4, 6) formant discothèque (DT) et présentant une pluralité d'emplacements de stockage destinés à recevoir chacun l'un desdits supports d'enregistrement (D), tous les emplacements de stockage s'ouvrant sur une même face desdits moyens de stockage;
- au moins un dispositif de lecture/enregistrement (2) desdits supports (D) placé au voisinage desdits moyens de stockage (3, 4, 6) de manière à pouvoir être chargé et déchargé par ladite face des moyens de stockage,
- des moyens de transfert (8) pour transférer sélectivement chacun desdits supports d'enregistrement (D) d'un emplacement de stockage qui lui est affecté dans lesdits moyens de stockage (3,4,6) vers ledit dispositif de lecture/enregistrement (2) ou inversement, lesdits moyens de transfert étant agencés pour se déplacer selon deux directions perpendiculaires devant ladite face,
- des moyens de commande (15, 0) pour commander lesdits moyens de transfert (8); et
- des moyens de stockage temporaire (7) desdits supports d'enregistrement (D) montés dans ladite discothèque (DT) et comportent une pluralité d'emplacements de stockage prévus côte à côte devant ladite face pour permettre le stockage temporaire desdits supports d'enregistrement et pouvant être placés sélectivement par rapport à ladite face de manière qu'ils puissent être desservis par lesdits moyens de transfert (8) dans une position et être chargés ou déchargés de supports d'enregistrement dans une autre position,
- cette installation étant **caractérisée en ce que** lesdits moyens de stockage temporaire (7) sont montés mobiles dans ladite discothèque (D) dans un plan parallèle à ladite face de manière à pouvoir être écartés de la zone où évoluent lesdits moyens de transfert (8) devant lesdits moyens de stockage (3, 4, 6), lesdits moyens de stockage temporaire (7) pouvant ainsi être chargés en nouveaux supports d'enregistrement et/ou déchargés d'anciens supports d'enregistrement (D), pendant que l'installation continue à fonctionner pour l'enregistrement et/ou la lecture desdits supports.

2. Installation suivant la revendication 1, **caractérisée en ce que** lesdits moyens de stockage temporaire (7) se présentent sous la forme d'une cassette amovible.

3. Installation suivant l'une quelconque des revendications 1 et 2, **caractérisé en ce que** ladite discothèque (DT) définit des compartiments de stockage (6), dont au moins deux des compartiments (6A, 6B) prévus côte à côte sont destinés à recevoir temporairement lesdits moyens de stockage temporaire (7) pour les opérations de transfert des supports (D) vers les autres compartiments (6) de la discothèque (DT) ou inversement.

4. Installation suivant la revendication 3, **caractérisée en ce que** le ou les compartiments (6A, 6B) destinés à recevoir lesdits moyens de stockage temporaire (7) sont prévus près d'une paroi d'une enceinte (1) renfermant l'installation.

5. Installation suivant l'une quelconque des revendications 1 à 4, **caractérisée en ce que** ladite face est verticale, **en ce que** lesdits moyens de transfert (8) comportent des moyens de préhension (13, 20, 20A) déplaçables selon lesdits directions perpendiculaires.

6. Installation suivant l'une quelconque des revendications précédentes, **caractérisée en ce que** lesdits moyens de lecture/enregistrement (2) comportent au moins deux dispositifs individuels de lecture/enregistrement formant une batterie.

7. Installation suivant l'une quelconque des revendications 1 à 6, **caractérisée en ce que** ladite batterie de dispositifs de lecture/enregistrement (2) est placée en-dessous de ladite discothèque (DT).

8. Installation suivant l'une quelconque des revendications 1 à 7, **caractérisée en ce que** lesdits moyens de stockage temporaire (7) sont montés sur un chariot (88) monté mobile, de préférence de façon amovible, dans ladite discothèque (DT) entre une position de chargement/déchargement accessible de l'extérieur de l'installation et une position de transfert des supports (D) dans laquelle cette cassette peut être desservie par ledit dispositif de transfert (8).

9. Installation suivant l'une quelconque des revendications 4 à 8, **caractérisée en ce que** lesdits moyens de transfert (8, 8A) comportent des moyens de préhension (13, 20, 20A) disposés respectivement de part et d'autre de ladite discothèque (DT) pour desservir celle-ci de deux côtés opposés.

10. Installation suivant l'une quelconque des revendications 4 à 9, **caractérisée en ce que** lesdits moyens de préhension comprennent chaque fois deux pinces (20, 20A; 20', 20A') travaillant devant ladite face selon des mouvements coordonnés.

11. Installation suivant l'une quelconque des revendications 5 à 10, **caractérisée en ce que** lesdits moyens de transfert (8) comportent pour chacun desdits lecteurs (2) un mécanisme entrée/sortie (14) destiné à assurer le transfert desdits supports (D) à partir desdits moyens de préhension dans lesdits lecteurs respectifs, et inversement.

12. Installation suivant l'une quelconque des revendications 3 à 11, **caractérisée en ce que** chaque compartiment de stockage (6) comprend deux organes de maintien en forme de peigne (81; 86; 89) placés en regard l'un de l'autre à une distance à peu près égale à une dimension desdits supports (D) contre deux parois opposées (3) de chaque compartiment, et **en ce que** lesdits peignes sont pourvus de moyens élastiques (83; 85; 90) permettant le maintien élastique desdits supports.

## Patentansprüche

1. Vorrichtung zum Schreiben und/oder Lesen von Informationsträgern für Ton, Video, informationstechnischer und/oder photographischer Art u. dgl., wie Magnetbänder, Schallplatten oder Videoscheiben, Diapositive u. dgl., mit
- Speichermitteln (3, 4, 6), die eine Diskothek (DT) bilden und zahlreiche Speichermittel aufweisen, die jeweils zur Aufnahme eines der Aufzeichnungsträger (D) bestimmt sind, wobei alle Speichermittel sich zu der selben Außenseite der Speichermittel hin öffnen;
- mindestens einer in der Nähe der Speichermittel (3, 4, 6) angeordneten Lese-/Schreibeinrichtung für die Träger (D), die derart angeordnet ist, dass sie von der genannten Außenseite der Speichermittel her beladen und entladen werden kann,
- Überführungsmitteln (8) zur selektiven Überführung jedes der Aufzeichnungsträger (D) von einer ihm zugewiesenen Speicherstelle in den Speichermitteln (3, 4, 6) zu der Lese-/Schreibeinrichtung, oder umgekehrt, wobei die Überführungsmittel derart angetrieben sind, dass sie vor der genannten Seite in zwei rechtwinklig verlaufenden Richtungen bewegt werden,
- Steuermitteln (15, O) zur Steuerung der Überführungsmittel (8); und
- in der Diskothek (DT) vorgesehene zahlreiche Speichermittel Seite an Seite vor der genannten Außenseite enthaltenden temporären Speichermitteln (7) zur Ermöglichung einer temporären Speicherung der Aufzeichnungsträger, die im Bezug auf die Außenseite selektiv platzierbar sind, derart, dass sie in einer Position von den Überführungsmitteln (8) bedienbar sind und in einer anderen Position mit den Aufzeichnungsträgern beladbar oder von ihnen entladbar sind,
- wobei die Einrichtung **dadurch gekennzeichnet ist, dass** die temporären Speichermittel (7) der Diskothek (DT) in einer parallel zu der Außenseite verlaufenden Ebene bewegbar sind, derart, **dass** sie einen Abstand von der Zone einhalten können, wo die Überführungsmittel (8) vor den Speichermitteln (3, 4, 6) bewegt werden, wobei die temporären Speichermittel (7) ebenfalls mit neuen Aufzeichnungsträgern geladen oder von alten Aufzeichnungsträgern (D) entladen werden können, während die Einrichtung mit der Aufzeichnung und/oder dem Lesen der Träger fortfährt.

2. Einrichtung nach Anspruch 1, **dadurch gekennzeichnet, dass** die temporären Speichermittel (7) die Form einer herausnehmbaren Kassette haben.

3. Einrichtung nach Anspruch 1 oder 2, **dadurch gekennzeichnet, dass** die Diskothek (DT) Speicherabteile (6) bildet, von denen mindestens zwei Abteile (6A, 6B) Seite an Seite angeordnet und dazu bestimmt sind, die temporären Speichermittel für die Vorgänge der Überführung der Träger (D) zu den anderen Abteilen (6) der Diskothek, oder umgekehrt, vorübergehend aufzunehmen.

4. Einrichtung nach Anspruch 3, **dadurch gekennzeichnet, dass** das oder die Abteile (6A, 6B), die zur Aufnahme der temporären Speichermittel (7) dienen, nahe einer Wand einer die Einrichtung umschließenden Einfassung vorgesehen sind.

5. Einrichtung nach einem der Ansprüche 1 bis 4, **dadurch gekennzeichnet, dass** die genannte Außenseite vertikal verläuft und **dass** die Überführungsmittel (8) Greifmittel (13, 20, 20A) aufweisen, die in zwei rechtwinklig verlaufenden Richtungen bewegbar sind.

6. Einrichtung nach einem der vorhergehenden Ansprüche, **dadurch gekennzeichnet, dass** die Lese-/Schreib-Mittel (2) mindestens zwei einzelne Lese-/Schreib-Vorrichtungen aufweisen, die eine Batterie bilden.

7. Einrichtung nach einem der Ansprüche 1 bis 6, **dadurch gekennzeichnet, dass** die Batterie der Lese-/Schreib-Vorrichtungen (2) unterhalb der Diskothek (DT) angeordnet ist.

8. Einrichtung nach einem der Ansprüche 1 bis 7, **dadurch gekennzeichnet, dass** die temporären Speichermittel (7) vorzugsweise herausnehmbar auf einem Wagen (88) angeordnet sind, der in der Diskothek (DT) zwischen einer von außerhalb der Einrichtung zugänglichen Lade-/Entladeposition und einer Überführungsposition für die Träger (D), in der die Kassette von der Überführungseinrichtung (8) bedient werden kann, bewegbar ist.

9. Einrichtung nach einem der Ansprüche 4 bis 8, **dadurch gekennzeichnet, dass** die Überführungsmittel (8, 8A) Greifmittel (13, 20, 20A) aufweisen, die jeweils auf beiden Seiten der Diskothek (DT) angeordnet sind, um diese von beiden entgegengesetzten Seiten her zu bedienen.

10. Einrichtung nach einem der Ansprüche 4 bis 9, **dadurch gekennzeichnet, dass** die Greifmittel jeweils zwei Klemmen (20, 20A); (20', 20A') aufweisen, die mit koordinierten Bewegungen vor der genannten Außenseite betrieben sind.

11. Einrichtung nach einem der Ansprüche 5 bis 10, **dadurch gekennzeichnet, dass** die Überführungsmittel (8) für jede der Lesevorrichtungen (2) einen Eingabe-/Ausgabemechanismus (14) aufweisen, der dazu bestimmt ist, die Übertragung der Träger (D) von den Greifmitteln zu den jeweiligen Lesevorrichtungen, und umgekehrt, zu ermöglichen.

12. Einrichtung nach einem der Ansprüche 3 bis 11, **dadurch gekennzeichnet, dass** jedes Speicherabteil (6) zwei Halteorgane in Kammform (81; 86; 89) aufweist, die gegen zwei einander gegenüberliegende Wände (3) zueinander in einem Abstand angeordnet sind, der beinahe gleich einem Maß der Träger (D) eines jeden Abteils ist, und **dass** die Kämme mit elastischen Elementen (83; 85; 90) versehen sind, die das elastische Halten der Träger ermöglichen.

## Claims

1. Installation intended for recording onto and/or readout from audio, video, computerised and/or photographic, etc. information carriers such as magnetic tapes, audio or video discs, transparencies or the like, of the type comprising:
- storage means (3, 4, 6) forming a record library (DT) and exhibiting a plurality of storage locations, each intended to receive one of said information carriers (DT), all the storage locations opening at one and the same face of said storage means;
- at least one reading/recording arrangement (2) for said carriers (D) placed proximate said storage means (3, 4, 5) so as to allow charging and discharging of the storage means at said face,
- transfer means (8) for selectively transferring each of said record carriers (D) to or from a storage location attributed thereto in said storage means (3, 4, 6) towards said reading/recording arrangement (2), said transfer means being so arranged as to move in front of said face according to two perpendicular directions,
- control means (15, O) for controlling said transfer means (8); and
- temporary storage means (7) for said record carriers (D) mounted within said record library (DT) and comprising a plurality of storage locations disposed in side by side relationship in front of said face so as to allow temporary storage of said record carriers, said temporary storage means being movable selectively with respect to said face so as to be served by said transfer means (8) in one position and charged or discharged with record carriers in another position,
- said installation being **characterised in that** said temporary storage means (7) are mounted in said record library (D) so as to be movable in a plane parallel to said face and to be drawn aside from the zone in which said transfer means (8) moves in front of said storage means (3, 4, 6), said temporary storage means (7) being thus loadable with new record carriers and/or dischargeable with old record carriers (D) during which the installation keeps on its operation for recording and/or reading of said carriers.

2. Installation as set forth in claim 1, **characterised in that** said temporary storage means (7) takes the form of a removable cassette.

3. An installation as set forth in any one of claims 1 and 2, **characterised in that** said record library (DF) defines storage compartments (6), of which at least two thereof (6A, 6B) arranged in a side-by-side relationship are intended to accommodate temporarily said temporary storage means (7) for the transfer operations of the carriers (D) towards or from the other compartments (6) of the record library.

4. Installation as set forth in claim 3, **characterised in that** said compartment(s) intended to accommodate said temporary storage means (7) is (are) placed close to the wall of an enclosure (1) containing the installation.

5. Installation as set forth in any one of claims 1 - 4, **characterised in that** said frontal plane is vertical, and **in that** said transfer means (8) includes grasping means (13, 20, 20A) displaceable along said perpendicular directions.

6. Installation as set forth in any one of the preceding claims, **characterised in that** said reading/recording means (2) includes at least two individual reading/recording arrangements forming a battery.

7. Installation as set forth in any one of claims 1 - 6, **characterised in that** said battery of reading/recording arrangements (2) is placed below said record library (DT).

8. Installation as set forth in any one of claims 1 - 7, **characterised in that** said temporary storage means (7) are mounted onto a movably mounted carriage (88), preferably removable, within said record library (DT) and displaceable between a loading/unloading position accessible from the exterior of the installation and a transfer position for the carriers (D) in which such cassette can be served by said transfert arrangement (8).

9. Installation as set forth in any one of claims 1 - 7, **characterised in that** said temporary storage means (7) are mounted onto a movably mounted carriage (88), preferably removable, within said record library (DT) and displaceable between a loading/unloading position accessible from the exterior of the installation and a transfer position for the carriers (D) in which such cassette can be served by said transfer arrangement (8).

10. Installation as set forth in any one of claims 4 - 9, **characterised in that** said grasping means comprises in each case two clamps (20, 20A, 20', 20A') working in co-ordinated movements in front of said frontal plane.

11. Installation as set forth in any one of claims 5 - 10, **characterised in that** said transfer means (58) comprises an input/ output mechanism (14) for each of said readers (2), intended to assure the transfer of said carriers (D) from said grasping means into and out of said respective readers.

12. Installation as set forth in any one of claims 3 - 11, **characterised in that** each storage compartment (6) comprises two retention elements in comb form (81; 86; 89) placed to face one another at a distance approximately equal to a dimension of said carriers (D) up against two opposite walls (3) of each compartment, and **in that** said combs are provided with elastic means (83; 85; 90) enabling the elastic retention of said carriers.
